(19) Europäisches Patentamt
European Patent Office
Office européen des brevets

(11) **EP 1 775 962 A1**

(12) **EUROPEAN PATENT APPLICATION**
published in accordance with Art. 158(3) EPC

(43) Date of publication:
**18.04.2007 Bulletin 2007/16**

(51) Int Cl.:
*H04N 7/32* (2006.01)    *G06F 12/08* (2006.01)

(21) Application number: **05765473.3**

(86) International application number:
**PCT/JP2005/012422**

(22) Date of filing: **05.07.2005**

(87) International publication number:
**WO 2006/008961 (26.01.2006 Gazette 2006/04)**

(84) Designated Contracting States:
**DE FR GB**

(30) Priority: **16.07.2004 JP 2004210761**

(71) Applicant: **SONY CORPORATION**
**Tokyo 141-0001 (JP)**

(72) Inventor: **NAKAGAWA, Shinji**
**c/o Sony Corp.**
**Shinagawa-Ku,**
**Tokyo 1410001 (JP)**

(74) Representative: **Jackson, Jonathan Andrew et al**
**D Young & Co**
**120 Holborn**
**GB-London EC1N 2DY (GB)**

(54) **INFORMATION PROCESSING SYSTEM, INFORMATION PROCESSING METHOD, AND COMPUTER PROGRAM**

(57)    Each sub-processor executes processing, assigned by a main processor, without reducing the performance of an entire system.

During transfer of data from the main memory to a cache, a sub-processor for performing decoding processing on a compressed image calculates a cache area based on a parameter indicating a feature of an image and adaptively changes a memory region to be cached, thereby increasing a cache hit probability during a subsequent processing. The performance of image signal processing performed by the sub-processor is improved, traffic in a system bus for memory transfer is reduced, and a decrease in the performance of the entire system is prevented.

FIG. 19

START
CALCULATE POSITION INFORMATION OF REFERENCE IMAGE BASED ON MOTION VECTOR — S21
DETERMINE CACHE — S22
CACHE HIT
CACHE MISS
PREDICT MOTION VECTOR OPERATION — S23
CALCULATE CACHE AREA — S24
START TRANSFER — S25
WAIT FOR END OF TRANSFER — S26
END

**Description**

Technical Field

The present invention relates to an information processing system, an information processing method, and a computer program which link operations of two or more pieces of equipment. In particular, the present invention relates to an information processing system, an information processing method, and a computer program which cause multiple pieces of equipment to operate as a virtual single piece of equipment by performing distributed processing through a cooperated operation.

More specifically, the present invention relates to an information processing system, an information processing method, and a computer program which allow processors, included in an information processing apparatus having a multi-processor configuration that includes one or more sub-processors and a main processor for giving an instruction for executing the program to each sub-processor, to preferably operate in cooperation with each other. In particular, the present invention relates to an information processing system, an information processing method, and a computer program which cause each sub-processor to execute processing, assigned by the main processor, with high performance and without a performance decrease in the entire system.

Background Art

It is known that interconnecting multiple computers by a network achieves sharing of information resources, sharing of hardware resources, and collaboration between multiple users. Various media for connecting computers are available, such as LANs (local area networks), WANs (wide area networks), and the Internet.

Recently in particular, technologies for computers, networks, and so on penetrate deeply into ordinary households. Information equipment, such as in-home personal computers and PDAs (personal digital assistants), and AV equipment, such as television receivers and video playback apparatuses, as well as various information appliances, CEs (consumer electronics), and so on are interconnected via a home network. In many cases, such a home network is interconnected with an external wide-area network, such as the Internet, via a router.

While an application in which multiple pieces of AV equipment are connected over a home network is possible as described above, there is a problem in that a sufficient cooperation among the AV equipment is not achieved. For such a problem, development and research on grid computing that achieves high computational performance through cooperated operation of equipment are underway in order to link the equipment on the network (e.g., refer to Patent Documents 1 to 5).

According to the grid computing technology, multiple information apparatuses on the network operate in cooperation with each other to perform distributed processing, so that the user can operate them as a virtual single information processing apparatus.

For example, when multiple information processing apparatuses having video-recording functions are connected on the network, it is possible to achieve a cooperated operation for video-recording reservation. That is, when multiple information processing apparatuses cooperate with each via a home network in a video-recording reservation operation, they operate virtually as a single piece of video-recording equipment on the home network. By using the user interface of any piece of the equipment, the user can make a video-recording reservation using an arbitrary piece of the equipment connected to the home network.

In addition, through such a cooperation of video-recording reservation functions, it is possible to simultaneously make a reservation of a program whose reservation time overlaps (so-called "another program in a competing timeslot"). Similarly, it is possible to link operations of multiple pieces of equipment for playing back recorded content to achieve simultaneous and synchronous content playback. Linking the content playback functions to simultaneously and synchronously play back content recorded by different pieces of equipment allows the channel switching concept to be incorporated into the content playback.

Even when the hardware resources and processing capability of only one piece of equipment cannot meet a request from a user, such a virtual single piece of equipment can meet the request from the user by utilizing redundant processing capabilities of other pieces of equipment that operate in conjunction and cooperation with each other over the network. In addition, it is possible to achieve services that cannot be realized by an ordinary single piece of equipment.

Each information processing apparatus for achieving grid computing is configured as, for example, a multi-processor system. In this case, the information processing apparatus is equipped with one or more sub-processors each capable of executing a program loaded on its own local storage and a main processor that issues an instruction for executing the program to the sub-processor(s).

In such an information processing apparatus, the main processor can manage resources, such as the redundant processing capability of each sub-processor and can concurrently execute multiple functions. For example, video-recording reservation of a television program; playback of video-recorded content; and additional processing for video-recorded content, such as scene recognition and re-encoding/image enhancement, can be processed in a distributed manner through the use of the sub-processors.

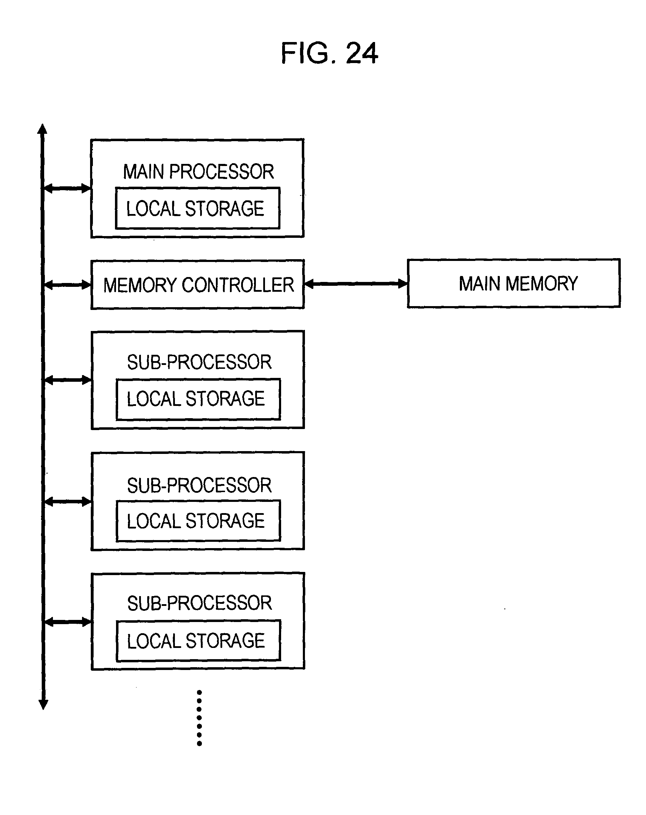

FIG. 24 schematically shows an example of the configuration of an information processing system for achieving grid computing.

The illustrated system has a configuration of multi processors including a main processor and one or more sub-processors, and each processor can execute a program loaded on its own local storage. The main processor can load, onto the local storage of a sub-processor, a sub-processor program for which processing is requested, and can issue an instruction for executing the program to the sub-processor.

In the illustrated system, a main memory that is shared by the individual processors via a system bus is provided. The main processor can assign processing of data loaded on the main memory to each sub-processor to allow multiple processing operations to be distributed and be concurrently executed.

For example, the sub-processor uses data transferred from the main memory to its own local storage to perform computation. An internal computing unit of the sub-processor accesses only its own local storage during computation and does not directly access the main memory. Upon the completion of computation, a computational result stored in the local storage is written back to the main memory. That is, the sub-processor uses its own local storage as the so-called "cache memory" without sequentially accessing the main memory. Employing such an operation procedure solves the following problems.

(1) Prevention of access conflict due to sharing of the main memory,
(2) A performance decrease due to the use of a low-speed main memory, and
(3) Prevention of a traffic increase in the system bus.

However, unless the hit rate of cache in the local storage is sufficiently high, the number of accesses to the main memory during data processing increases, and thus, the sub-processor's performance of data processing decreases. In addition, since the traffic in the system bus increases every time the main memory is accessed, the performance of the entire system also decreases.

When an information processing system having a multi-processor configuration as described above handles image processing, the main processor can assign decoding processing of a compressed image to one sub-processor. In this case, the main processor can further issue, to another sub-processor, an instruction for performing other processing on decoded image data, such as image-quality enhancement processing for editing image data to the user's preferred quality and re-encoding processing for re-encoding image data into another encoding system, so as to achieve a coordinated operation as the entire system.

In image compression processing, an entire frame is typically divided into small regions called macroblocks to perform signal processing. For example, basic compression algorithms for MPEG (Moving Picture Experts Group), which is one of standard image compression standards, are as follows.

(1) Information compression based on temporal screen correlation is performed using a macroblock as an encoding unit.
(2) A macroblock is segmented into sub-blocks and spatial information compression using DCT is performed.
(3) Variable length coding is performed utilizing motion-compensation inter-frame prediction and so on.
(4) Quantization scale control using a DCT coefficient is employed to control the total amount of code generated.

Also, in the image compression, inter-frame coding is typically performed to compress difference information between a frame to be compressed and a frame serving as a reference. For example, the MPEG uses "predictive coding" in which a signal value of a pixel is expressed by a difference from a signal value of a pixel of another time. In particular, it is achieved by a combination of "intraframe prediction" in which prediction is performed within a frame, "forward inter-frame prediction" in which prediction is preformed based on the playback screen, and "bidirectional inter-frame prediction" in which the current screen is predicted using both a previous playback screen and a future playback screen. Thus, as image types handled by the MPEG, there are three types of images, namely, an I picture (intra-picture) consisting of only an intra coding (inter-frame predicted) screen, a P picture (predictive-picture) generated by forward inter-frame prediction, and a B picture (bidirectionally predictive picture) generated by bidirectional inter-frame prediction.

The frame memory size ranges from about 3 megabytes to about 6 megabytes for an HD (high definition) size image. Thus, DRAMs that are low in cost per bit are used in systems handling image frames involving image encoding/decoding. In addition, since DRAMS have low speeds, typical processors often employ systems having caches. In a typical cache operation, data of a contingent region is stored at a memory address to which the processor accessed, the memory address being included in a cache memory.

When an information processing system having a multi-processor configuration as described above is used to achieve decoding processing for a compressed image, regions for data required for a large-capacity memory, such as a frame memory, for storing compressed image data and decoding results are reserved in the main memory shared by the entire system. Thus, the sub-processors need to transfer only necessary part of data to small-size local storages in accordance with macroblock decoding processing and to perform decoding processing.

For example, when a compressed image subjected to inter-frame predictive coding is decoded, data transfer between the main memory and the local memory occurs as follows.

(1) Transfer of compressed difference signals (from the main memory to the local storage)
(2) Transfer of predicted image data (from the main memory to the local storage)
(3) Transfer of a decoding result (from the local storage to the main memory)

For example, since a bus connecting the main memory and the local storage is shared by multiple modules and a low-speed DRAM is often used as the main memory, data transfer between the main memory and the local storage becomes a cause of a decrease in the performance of the entire system.

As one solution to the problem, a cache may be implemented. Implementation of a cache can reduce the number of accesses to the main memory and can consequently prevent a decrease in the performance of entire decoding processing. In the system having the multi-processor configuration shown in FIG. 24, each sub-processor utilizes its own local storage as a cache.

In case (1) in which compressed signals are transferred, compressed stream data is sequentially processed along a time axis; therefore, performing the typical cache operation in which data of a contingent region is cached at a memory address accessed by the sub-processor can facilitate that effective data is always stored in the cache.

In case (3) in which a decoding result is written back to the frame memory, it is not necessary to perform next processing using the transfer result; therefore, a performance decrease caused by transfer completion waiting of the sub-processor side does not occur.

In contrast, the predicted image data in case (2) varies in accordance with features of an image, i.e., the movement direction and the speed of images between frames; therefore, a cache-miss probability changes. That is, in the typical cache operation in which data of a contingent region is cached at a memory address to which the sub-processor accessed, a sufficient cache hit rate cannot be obtained.

As a result of the cache miss, data-transfer waiting occurs, decoding processing by the sub-processor is interrupted, and the traffic in the system bus increases. Thus, the performance of the entire system decreases.

[Patent Document 1]
Japanese Unexamined Patent Application Publication No. 2002-342165
[Patent Document 2]
Japanese Unexamined Patent Application Publication No. 2002-351850
[Patent Document 3]
Japanese Unexamined Patent Application Publication No. 2002-358289
[Patent Document 4]
Japanese Unexamined Patent Application Publication No. 2002-366533
[Patent Document 5]
Japanese Unexamined Patent Application Publication No. 2002-366534

Disclosure of Invention

Problems to be Solved by the Invention

An object of the present invention is to provide a superior information processing system and information processing method and a computer program which allow processors, included in an information processing apparatus having a multi-processor configuration that includes one or more sub-processors and a main processor for giving an instruction for executing a program to each sub-processor, to preferably operate in cooperation with each other.

Another object of the present invention is to provide a superior information processing system and information processing method and a computer program which allow each sub-processor to execute processing, assigned by the main processor, with high performance and without a performance decrease in the entire system.

Still another object of the present invention is to provide a superior information processing system and information processing method and a computer program which allow processing of data on a memory shared by an entire system to be assigned to each sub-processor and which allow each processor to execute the assigned processing without reducing the performance of the entire system.

A further object of the present invention is to provide a superior information processing system and information processing method and a computer program which allow sub-processors to execute decoding processing of a compressed image on a memory, shared by an entire system, with high performance and without a performance decrease in entire system.

Means for Solving the Problems

The present invention has been made in view of the foregoing problems, and a first aspect of the present invention provides an information processing system. The information processing system includes one or more sub-processors each capable of executing a program loaded on its own local storage, a main processor for giving an instruction for executing the program to the sub-processor; and a main memory shared by the processors. Based on a feature of data currently cached on the local storage, a sub-processor to which processing of data on the main memory is assigned adaptively determines a cache area on the main memory, the cache area being to be cached on the local storage next.

The "system" used herein refers to a combination in which multiple apparatuses (or function modules for accomplishing specific functions) gather logically and does not particularly restrict whether or not the apparatuses or the function modules are provided in a single housing.

According to the information processing system having the multi-processor configuration that includes one or more sub-processors each capable of executing a program loaded on its own local storage and a processor for giving an instruction for executing the program to the sub-processor, processing that becomes a high-load processing for one processor can be processed in a distributed manner through a cooperation of the sub-processors or two or more associated data-processing operations can be executed in a synchronous and cooperated manner. Thus, it is possible to provide users with highly-functional and high-value added services.

During processing of data on the main memory, each sub-processor can prevent conflict in accessing the main memory and a traffic increase in the system bus, by using its own local storage as the so-called "cache memory. However, the advantage cannot be fully utilized unless the cache hit rate is sufficiently high.

In contrast, according to the present invention, a next cache area is adaptively determined based on currently cached data. Thus, the probability of hitting cache on the local storage during subsequent data processing increases and the performance of data processing of the sub-processor itself improves. In addition, the cache hitting can reduce the traffic in the system bus in accessing the main memory, which can also improve the performance of the entire system.

For example, when a sub-processor is used to perform decoding processing on compressed-image data on the main memory shared by the entire system, the sub-processor adaptively determines a cache area on the main memory, the cache area being to be cached on the local storage next, based on a parameter indicating a feature of image data currently cached on the local storage.

Generally, compressed-image data is subjected to inter-frame coding processing in which difference information between a frame to be compressed and a frame serving as a reference is compressed. Thus, it is sufficient for the sub-processor to determine a reference position used for generating the difference information, the reference position being located in a reference frame, based on a parameter indicating a feature of an image data and to use image data around the reference position as a cache area. As the parameter indicating the feature of the image data, as referred to herein, image-block motion information encoded with the image data can be used. Further, a cache area can be determined by predicting an operation of an image block thorough calculation of the movement direction and the speed of the image block based on the encoded image-block motion information.

In this case, motion information corresponding to several previous image blocks may be stored, and motion information used for a next image block may be determined by extrapolation based on the movement speeds in the x and Y coordinate directions.

Also, an operation of an image block may be constantly predicted to execute cache read-ahead processing in a speculative manner.

Even when the movement direction and the speed of an image block are calculated using a motion vector to determine a cache area, a cache region is limited. Thus, when motion prediction and cache-area determination are performed only when a cache miss occurs, a miss occurs at some point and a process required for transfer waiting causes the processing performance to decrease.

Thus, regardless of whether or not a cache miss error occurs, a motion vector is constantly predicted to execute cache read-ahead processing in a speculative manner. In this case, motion-vector prediction processing is required every time, but the performance of the entire system can be improved as long as the load of a process required in the prediction processing is low compared to the data-transfer waiting processing during a cache miss. Data transfer performed between the main memory and the local storage as a result of the speculative cache processing ends in a shorter period of time than image decoding processing performed for each macroblock. Thus, it is possible to efficiently perform cache processing of reference image data without reducing the overall performance of the decoding system.

A second aspect of the present invention provides a computer program in which processing procedures for causing, on a system that includes one or more sub-processors each capable of executing a program loaded on its own local storage, a main processor for giving an instruction for executing the program to the sub-processor, and a main memory shared by the processors, data on the main memory to be assigned to the sub-processor and be executed is written in a computer-readable format. The computer program causes the computer system to execute:

a procedure of transferring data to be processed from the main memory to the local storage of the sub-processor;
a data processing procedure of causing the sub-processor to process the data on the local storage;
a cache-area determining procedure of adaptively determining a cache area on the main memory, the cache area being to be cached on the local storage next, based on a feature of the data processed on the local storage;
a procedure of determining whether or not a cache area is already cached on the local storage; and
a cache-area transferring procedure of transferring the determined cache area from the main memory to the cache area, when a cache miss occurs.

The computer program according to the second aspect of the present invention is directed to a computer program written in a computer-readable format so as to achieve predetermined processing on a computer system. In other words, installing the computer program according to the second aspect of the present invention onto a computer system makes it possible to achieve a cooperative effect on the computer system and to provide advantages similar to those of the information processing system according to the first aspect of the present invention.

Advantages of the Invention

According to the present invention, it is possible to provide a superior information processing system and information processing method and a computer program which allow each sub-processor, included in an information processing system having a multi-processor configuration including one or more sub-processors and a main processor for giving an instruction for executing a program to each sub-processor, to execute processing assigned by the main processor without reducing the performance of the entire system.

In addition, according to the present invention, it is possible to provide a superior information processing system and information processing method and a computer program which allow processing of data on a memory shared by an entire system to be assigned to each sub-processor and which allow each processor to execute the assigned processing without reducing the performance of the entire system.

Additionally, according to the present invention, it is possible to provide a superior information processing system and information processing method and a computer program which allow decoding processing of a compressed image on a memory, shared by an entire system, to be executed using a sub-processor without reducing the performance of the entire system.

According to the present invention, the movement direction and the movement speed of a motion vector are used to perform cache control in accordance with a feature of a reference image. As a result, an increase in the cache hit rate of reference image data during macro-block decoding processing reduces the probability of transfer waiting, which can improve the performance in the processing speed of the decoding system.

Further, according to the present invention, data that is likely to be hit is stored in a cache. Thus, when the same performance as that of the conventional system is maintained, the cache size can be reduced. As a result, the amount of transfer between the memories can be reduced, so that the power efficiency improves.

Further objects, features, and advantages of the present invention will become apparent from more detailed descriptions in accordance with an embodiment described below according to the present invention and the accompanying drawings.

Brief Description of the Drawings

[FIG. 1] FIG. 1 is a diagram showing the configuration of a network system according to one embodiment of the present invention.
[FIG. 2] FIG. 2 includes diagrams illustrating a procedure for accessing from a sub-processor 23 to a main memory 24.
[FIG. 3] FIG. 3 is a diagram showing an example of the configuration of a software cell.
[FIG. 4] FIG. 4 is a diagram showing a data region of a software cell when a DMA command is a status return command.
[FIG. 5] FIG. 5 is a diagram showing a state in which multiple information processing apparatuses operate as a virtual single information processing apparatus.

[FIG. 6] FIG. 6 is a diagram showing an example of the software configuration of an information processing controller.

[FIG. 7] FIG. 7 is a diagram showing a state in which four information processing apparatuses operate as a virtual single information processing apparatus.

[FIG. 8] FIG. 8 is a diagram showing an example of distributed processing in the system shown in FIG. 7.

[FIG. 9] FIG. 9 is a diagram showing a specific example of the information processing apparatuses and the system.

[FIG. 10] FIG. 10 is a diagram showing the hardware configuration of the hard-disk recorder shown in FIG. 9.

[FIG. 11] FIG. 11 is a diagram showing the software configuration of the hard-disk recorder shown in FIG. 9.

[FIG. 12] FIG. 12 is a diagram showing the hardware configuration of the PDA shown in FIG. 9.

[FIG. 13] FIG. 13 is a diagram showing the software configuration of the PDA shown in FIG. 9.

[FIG. 14] FIG. 14 is a diagram showing the hardware configuration of the portable CD player shown in FIG. 9.

[FIG. 15] FIG. 15 is a diagram showing the software configuration of the portable CD player shown in FIG. 9.

[FIG. 16] FIG. 16 is a diagram schematically showing the functional configuration of a system having a multi-processor configuration when one sub-processor performs image decoding processing.

[FIG. 17] FIG. 17 is a flow chart showing a basic operation procedure for decoding compressed image signals.

[FIG. 18] FIG. 18 is a flow chart showing a processing procedure for obtaining the position (cache area) of image data used for prediction in a reference frame.

[FIG. 19] FIG. 19 is a flow chart showing a processing procedure for obtaining the position (cache area) of image data used for prediction in a reference frame.

[FIG. 20] FIG. 20 is a diagram illustrating a processing procedure for predicting a motion vector to be decoded for a next macroblock based on the current macroblock and surrounding motion vectors.

[FIG. 21] FIG. 21 includes diagrams illustrating a processing procedure for determining a frame region to be cached, based on a motion vector.

[FIG. 22] FIG. 22 is a diagram illustrating a method for calculating a cache area.

[FIG. 23] FIG. 23 is a flow chart showing a processing procedure for obtaining the position (cache area) of image data used for prediction in a reference frame.

[FIG. 24] FIG. 24 is a diagram schematically showing an example of the configuration of an information processing system for achieving grid computing.

Reference Numerals

10, 11, 12 ...     information processing apparatus
20 ...             virtual information processing apparatus
30 ...             local network
40 ...             communications network
50 ...             server
60 ...             functional information database
61 ...             software database
71 ...             information-processing-apparatus functional database
72 ...             functional database
73 ...             cooperated functional database

Best Mode for Carrying Out the Invention

An embodiment of the present invention will be described below in detail with reference to the drawings.

A. System Configuration

According to the present invention, operations between two or more information processing apparatuses are preferably linked through a home network, so that video-recording reservation operations of pieces of equipment placed at different locations are easily and efficiently performed. A grid computing technology for realizing high computational performance through cooperated operation of equipment is utilized in order to link equipment on the network.

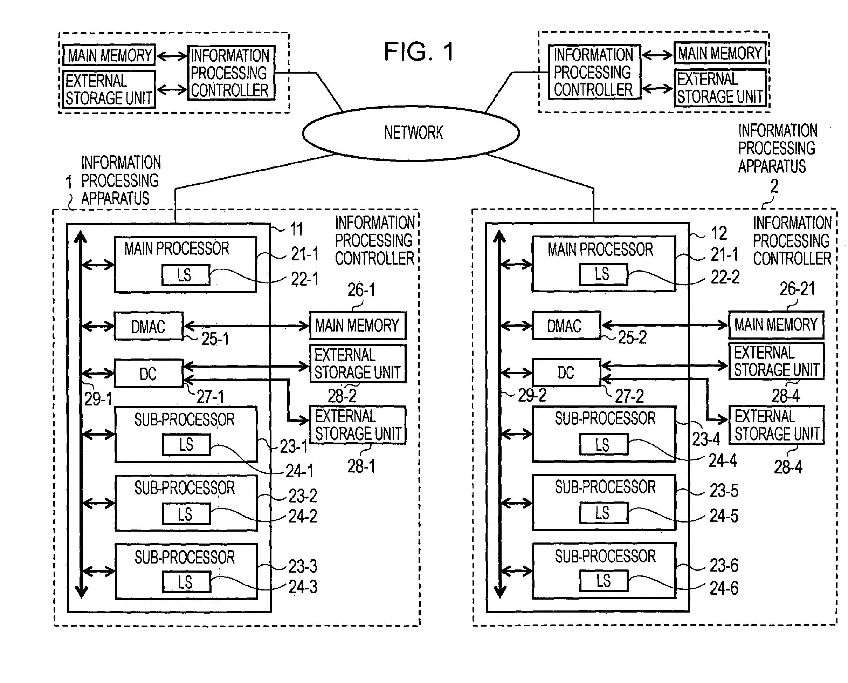

FIG. 1 schematically shows the configuration of a network system configured by employing grid computing.

The term "network" includes the Internet and/or another wide-area network, and the term "wide-area network" includes a private network, such as a LAN (local area network) and/or home network, connected via a gate way and so on. The home network can be physically implemented with a standard network interface, such as 10Base-T, 100Base-TX, or Giga Ethernet. UPnP (Universal Plug and Play) can also be used as a scheme for detecting other equipment on the home network. With UPnP, multiple pieces of networked equipment exchange definition files written in an XML (extended Markup Language) format to perform mutual authentication through addressing processing, discovery processing, and service requesting processing. Alternatively, it is also achievable by broadcasting packets in which specific equipment information in the same segment is written.

Multiple information processing apparatuses are connected over the network. Examples of the information processing apparatuses include AV equipment having storage media and video-recording reservation functions, such as DVD recorders and HD recorders; playback-only AV equipment that has no recording function, such as compact discs; and other information processing apparatuses. Other examples of the information processing apparatuses include computer processing systems, such as PDAs and personal computers. In the example shown in FIG. 1, multiple information processing apparatuses 1, 2, 3, and 4 are connected through a network 9.

A-1. Information Processing Apparatus and Information Processing Controller

The information processing apparatuses 1, 2, 3, and 4 are, for example, various types of AV (Audio and Visual) equipment and portable equipment (described below).

As shown, the information processing apparatus 1 has an information processing controller 11 as a computer-function unit. The information processing controller 11 includes a main processor 21-1, sub-processors 23-1, 23-2, and 23-3, a DMAC (direct memory access controller) 25-1, and a DC (disk controller) 27-1. It is desired that the information processing controller 11 be configured as a one-chip IC (integrated circuit).

The main processor 21-1 performs schedule management of program execution (data processing) by the sub-processors 23-1, 23-2, and 23-3 and overall management of the information processing controller 11 (the information processing apparatus 1). It may also be configured so that a program other than a program for performing the management runs in the main processor 21-1. In this case, the main processor 21-1 also serves as a sub-processor. The main processor 21-1 has an LS (local storage) 22-1.

Although the number of sub-processors included in one information processing apparatus may be one, it is desirably two or more. The illustrated example corresponds to a case in which the number of sub-processors is two or more. Under the control of the main processor 21-1, the sub-processors 23-1, 23-2, and 23-3 execute a program or programs in parallel or independently to process data. In addition, in some cases, a program in the main processor 21-1 can also run in cooperation with programs in the sub-processors 23-1, 23-2, and 23-3. The sub-processors 23-1, 23-2, and 23-3 also have LSs (local storages) 24-1, 24-2, and 24-3, respectively.

The DMAC (direct memory access controller) 25-1 accesses a program and data stored in a main memory 26-1, which is implemented with, for example, a DRAM (Dynamic RAM) and is connected with the information processing controller 11, without intervention of any processor. The DC (disk controller) 27-1 controls the operation of accessing external storage units 28-1 and 28-2, which are connected to the information processing controller 11.

The external storage units 28-1 and 28-2 may be either fixed disks (hard disks) or removable disks. As removable disks, various storage media may be used, such as MOs (magnetic disks), optical disks such as CD±RW and DVD±RW, memory disks, SRAMs (Static RAMs), and ROMs. While the DC 27-1 is referred to as "disk controller", it is essentially an external-storage-unit controller. As shown in FIG. 1, the information processing controller 11 can be configured so that multiple external storage units 28 are connectable.

The main processor 21-1, the sub-processors 23-1, 23-2, and 23-3, the DMAC 25-1, and the DC 27-1 are interconnected via a bus 29-1.

An identifier that allows the information processing apparatus 1, which incorporates the information processing controller 11, to be uniquely identified through the entire network is assigned to the information processing controller 11 as an information-processing-apparatus ID. Similarly, identifiers that allow the main processor 21-1 and the sub-processors 23-1, 23-2, and 23-3 to be respectively identified are assigned thereto as a main-processor ID and sub-processor IDs.

Since other information processing apparatuses 2, 3, and 4 are configured in the same manner, the descriptions thereof are omitted here. It is assumed herein that units having the same parent number, even with different branch numbers, operate in the same manner, unless otherwise specifically stated. It is also assumed that, when a branch number is omitted in the following description, the branch-number difference does not cause a difference.

A-2. Access from each Sub-processor to Main Memory

As described above, the sub-processors 23 in one information processing controller execute programs independently of each other to process data. Thus, when different sub-processors simultaneously perform reading from or writing to the same region in the main memory 26, a data mismatch can occur. Accordingly, access from the sub-processors 23 to the main memory 26 is performed according to the following procedure.

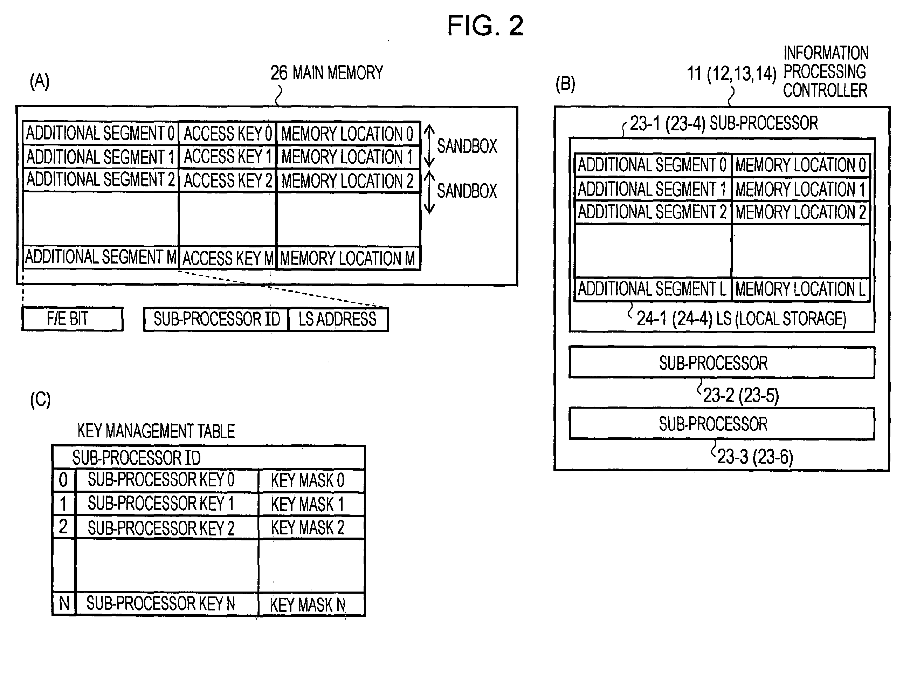

FIG. 2(A) shows locations in the main memory 26. As shown in the figure, the main memory 26 includes memory locations that allow multiple addresses to be specified. An additional segment for storing information indicating a data status is assigned to each memory location. The additional segment includes an F/E bit, a sub-processor ID, and an LS address (local-storage address). An access key, described below, is also assigned to each memory location. The F/E bit is defined as follows.

F/E bit = 0 indicates that the data is being read and processed by the sub-processor 23 or is invalid data that is not the latest data due to a blank state, and thus indicates that the reading is disabled. F/E bit = 0 also indicates that data can be written to the corresponding memory location, and the F/E bit is set to 1 after writing.

F/E bit = 1 indicates that data at the corresponding memory location has not been read by the sub-processor 23 and is thus unprocessed latest data. The data at the corresponding memory location is readable and the F/E bit is set to 0 after it is read by the sub-processor 23. F/E bit = 1 also indicates that data cannot be written to the corresponding memory location.

In addition, in the state of F/E bit = 0 (read-disabled/write-enabled) described above, a read reservation can be set with respect to the corresponding memory location. When a read reservation is to be performed on a memory location of F/E bit = 0, the sub-processor 23 writes, as read reservation information, the sub-processor ID and the LS address of the sub-processor 23 to the additional segment of the memory location on which the read reservation is to be performed.

Thereafter, when the data-writing-side sub-processor 23 writes data to the memory location on which the read reservation was performed and the F/E bit is set to 1 (read-enabled/write-disabled), reading is performed according to the sub-processor ID and the LS address pre-written to the addition segment as the read reservation information.

When data needs to be processed in multiple stages by multiple sub-processors, controlling reading/writing of data at each memory location, as described above, allows one sub-processor 23 for performing subsequent-stage processing to read, immediately after another sub-processor 23 for performing previous-stage processing writes processed data to a predetermined address in the main memory 26, the preprocessed data.

FIG. 2(B) shows memory locations in the LS 24 in each sub-processor 23. As shown in the figure, the LS 24 in each sub-processor 23 also includes memory locations that allow multiple addresses to be specified. Similarly, an additional segment is assigned to each memory location. The additional segment includes a busy bit.

When the sub-processor 23 reads data in the main memory 26 out to a memory location of its own LS 24, the sub-processor 23 sets the corresponding busy bit to 1 to make a reservation. Other data cannot be stored at the memory location having a busy bit of 1. After data is read out to a memory location in the LS 24, the busy bit becomes 0, so that the memory location can be used for an arbitrary purpose.

As shown in FIG. 2(A), multiple sandboxes that define regions in the main memory 26 are further contained in the main memory 26 connected to each information processing controller. The main memory 26 includes multiple memory locations and the sandbox is a collection of those memory locations. Each sandbox is assigned for each sub-processor 23 and can be exclusively used by the corresponding sub-processor. That is, each sub-processor 23 can use a sandbox assigned to itself, but cannot access data beyond the region.

A key management table as shown in FIG. 2(C) is further used in order to achieve exclusive control of the main memory 26. The key management table is stored in a relatively high-speed memory, such as an SRAM, in the information processing controller and is associated with the DMAC 25. Entries in the key management table include a sub-processor ID, sub-processor keys, and key masks.

A process in which the sub-processor 23 uses the main memory 26 is as follows. First, the sub-processor 23 outputs a read command or write command to the DMAC 25. This command contains the sub-processor ID of the sub-processor 23 and an address of the main-memory 26 that is a use-request target.

Before executing the command, the DMAC 25 refers to the key management table to check the sub-processor key of a sub-processor that is a use-request source. Next, the DMAC 25 compares the checked sub-processor key of the use-request source with access keys allotted to the memory locations in the main memory 26 that is the use-request target, the memory locations being shown in FIG. 2(A). Only when two keys match each other, the DMAC 25 executes the abovementioned command.

When an arbitrary bit of a key mask on the key management table shown in FIG. 2(C) becomes 1, a corresponding bit of a sub-processor key associated wit the key mask can become 0 or 1.

For example, the sub-processor key is assumed to be 1010. Typically, with the sub-processor key, only access to a sandbox having an access key of 1010 is possible. However, when a key mask associated with the sub-processor key is set to 0001, only a digit in which the bit of the key mask is set to 1 is masked in the matching determination between the sub-processor key and the access key. Thus, with the sub-processor key 1010, it is possible to access a sandbox having an access key of 1010 or 1011.

As described above, the exclusiveness of the sandboxes in the main memory 26 is achieved. That is, when data needs to be processed in multiple stages by multiple sub-processors provided in one information processing controller, only a sub-processor for performing previous-stage processing and a sub-processor for performing a subsequent-stage processing can access a predetermined address in the main memory 26, so that data can be protected.

Such exclusive memory control can be used, for example, as described below. First, immediately after the information processing apparatus is started, all the values of the key masks are 0s. It is assumed that a program in the main processor is executed and is operated in cooperation with a program in the sub-processors. When it is desired to temporarily store processing-result data, output from a first sub-processor, in the main memory and input the processing-result to a second sub-processor, a corresponding main memory region must naturally be accessed from both sub-processors. In such a case, the program in the main processor appropriately changes the value of the key mask to provide a main-memory region accessible from multiple sub-processors, so that the sub-processors can perform multi-stage processing.

More specifically, when multi-stage processing is performed according to the procedure of data from another information processing apparatus → processing by a first sub-processor → a first main memory region → processing by a second processor → a second main memory region, the second processor cannot access the first main memory region with the following settings:

the sub-processor key of the first sub-processor: 0100,
the access key of the first main memory region: 0100,
the sub-processor key of the second sub-processor: 0101, and
the access key of the second main memory region: 0101.

Accordingly, setting the key mask of the second sub-processor to 0001 allows the second sub-processor to access the first main memory region.

A-3. Generation and Configuration of Software Cell

In the network system shown in FIG. 1, because of distributed processing between the information processing apparatuses 1, 2, 3, and 4, software cells are transmitted between the information processing apparatuses 1, 2, 3, and 4. That is, the main processor 21 included in the information processing controller in one information processing apparatus can distribute processing by generating a software cell containing a command, program, and data and transmitting the software cell to another information processing apparatus through the network 9.

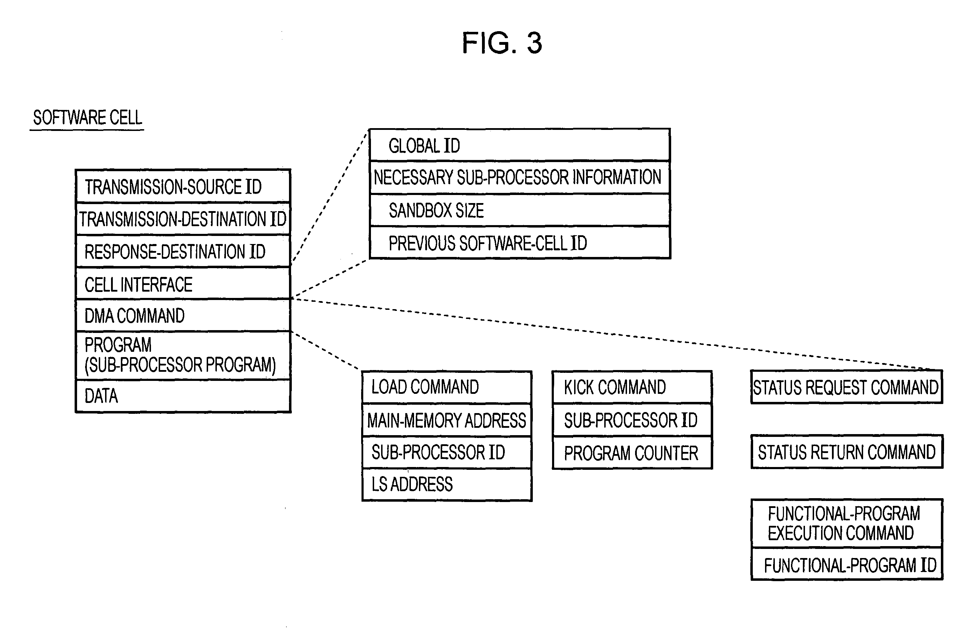

FIG. 3 shows one example of the structure of the software cell. The illustrated software cell includes a transmission-source ID, a transmission-destination ID, a response-destination ID, a cell interface, a DMA command, a program, and data.

the transmission-source ID contains a network address of an information processing apparatus that serves as the transmission source of the software cell, an information-processing-apparatus ID of the information processing controller in the information processing apparatus, and identifiers (a main-processor ID and sub-processor IDs) of the main processor 21 and the sub-processors 23 included in the information processing controller in the information processing apparatus.

The transmission-destination ID and the response-destination ID contain the same information regarding an information processing apparatus that serves as the transmission destination of the software cell and an information processing apparatus that serves as a response destination of an execution result of the software cell.

The cell interface is information required for using the software cell and is constituted by a global ID, necessary sub-processor information, a sandbox size, and a previous software-cell ID.

The global ID allows the software cell to be uniquely identified throughout the entire network and is created based on the transmission-source ID and data/time (data and time) of the creation or transmission of the software cell.

As the necessary sub-processor information, the number of necessary sub-processors required for executing the software cell is set. The amount of memory in the main memory 26 and the LSs 24 in the sub-processors 23, which is required for executing the software cell, is set as the sandbox size.

The previous software-cell ID is the identifier of a previous software cell in one group of software cells that request sequential execution of stream data or the like.

An execution section of the software cell is constituted by the DMA command, the program, and the data. The DMA command contains a series of DMA commands required for launching the program, and the program includes a sub-processor program to be executed by the sub-processor 23. The data in this case is processed by a program including the sub-processor program.

The DMA commands further include a load command, a kick command, a functional program execution command, a status request command, and a status return command.

The load command is a command for loading information in the main memory 26 into the LS 24 in the sub-processor 23, and includes, in addition to the load command, a main-memory address, a sub-processor ID, and an LS address. The main-memory address represents the address of a predetermined region in the main memory 26 that is an information load source. The sub-processor ID and the LS address indicate the identifier of the sub-processor 23 that is an information load destination and an address of the LS 24, respectively.

The kick command is a command for initiating program execution and includes a sub-processor ID and a program counter in addition to the kick command itself. The sub-processor ID identifies the sub-processor 23 to be kicked, and the program counter provides an address for a program-execution program counter.

The functional-program execution command is a command (described below) by which one information processing apparatus gives a request for executing a functional program to another information processing apparatus. The information processing controller in the information processing apparatus that has received the functional-program execution program identifies a functional program to be launched, based on a functional-program ID (described below).

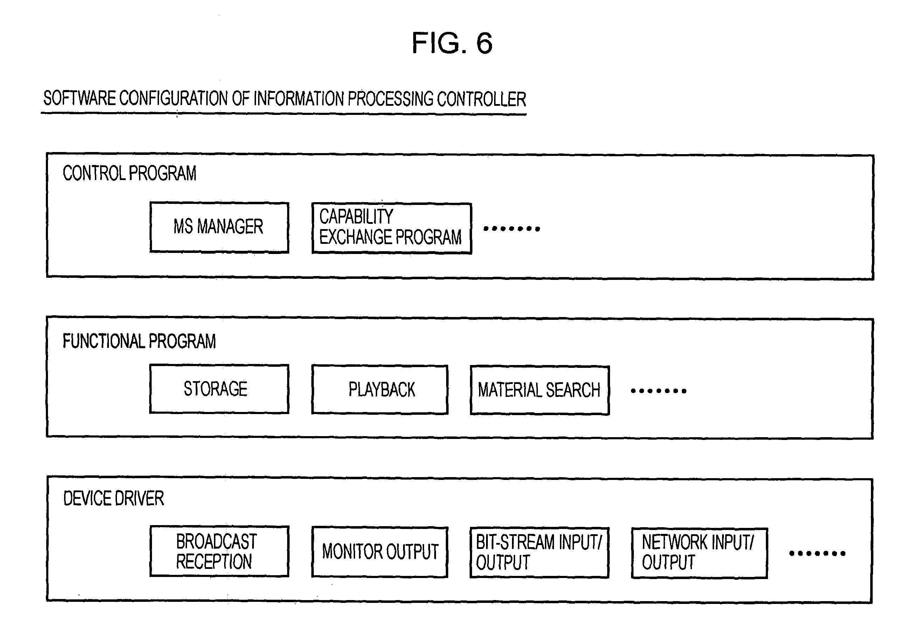

The status request command is a command for giving, to an information processing apparatus indicated by the response-destination ID, a request for transmitting apparatus information regarding the current operation status (state) of an information processing apparatus indicated by the transmission-destination ID. The functional program, which is described below, is a program categorized into functional programs in the configuration of software stored in the main memory 26 in the information processing controller, the configuration being shown in the diagram of FIG. 6. The functional program is loaded into the main memory 26 and is executed by the main processor 21.

That status return command is a command by which an information processing apparatus that has received the status request command returns its own apparatus information to an information processing apparatus indicated by a response-destination ID included in the status request command. The status return command stores the apparatus information in the data region in the execution section.

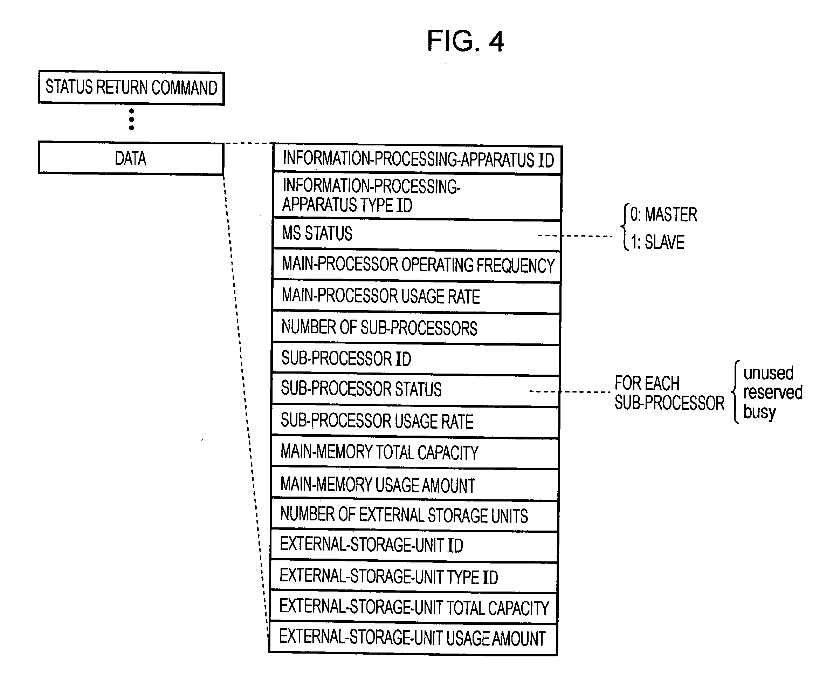

FIG. 4 shows the structure of the data region in the software cell when the DMA command is a status return command.

An information-processing-apparatus ID is an identifier for identifying an information processing apparatus having an information processing controller and represents the ID of an information processing apparatus that transmits the status return command. The information-processing-apparatus ID is generated by the main processor 21 included in the information processing controller in the information processing apparatus when the power is supplied, based on the data/time of the power supply, the network address of the information processing apparatus, the number of sub-processors 23 included in the information processing controller in the information processing apparatus, and so on.

An information-processing-apparatus type ID contains a value representing a feature of the information processing apparatus feature. Examples of the information-processing-apparatus feature referred to herein include, for example, a hard-disk recorder (described below), a PDA (personal digital assistant), and a portable CD (compact disc) player. The information-processing-apparatus type ID may also indicate a function of the information processing apparatus, such as a video/audio recording function or a video/audio playback function. Also, the value representing the feature and/or function of the information processing apparatus is predetermined. Retrieval of the information-processing-apparatus type ID makes it possible to recognize the feature and/or function of the information processing apparatus.

An MS (master/slave) status indicates which of a master apparatus and a slave apparatus the information processing apparatus is operating as, as described below. When the MS status is set to 0, it indicates that the information processing apparatus is operating as a master apparatus, and when the MS status is set to 1, it indicates that the information processing apparatus is operating as a slave apparatus.

A main-processor operating frequency indicates the operating frequency of the main processor 21 in the information processing controller. A main-processor usage rate indicates the usage rate of the main processor 21 with respect to all programs that are currently running on the main processor 21. The main-processor usage rate is a value indicating the ratio of a processing capability in use to the entire processing capability of the corresponding main processor. For example, the main-processor usage rate is determined in MIPS [million instructions per second], which is a unit for evaluating a processor processing capability or is determined based on processor usage time per unit time. This also applies to a sub-processor usage rate, which is described below.

The number of sub-processors indicates the number of sub-processors 23 included in the information processing controller. A sub-processor ID is an identifier for identifying each sub-processor 23 in the information processing controller.

A sub-processor status indicates the status of each sub-processor 23 and examples thereof include "unused", "reserved", and "busy" statuses. The "unused" status indicates that the sub-processor is neither currently in use nor reserved for use. The "reserved" indicates that the sub-processor is not currently in use but is reserved. The "busy" indicates that the sub-processor is currently in use.

A sub-processor usage rate indicates the usage rate of the sub-processor with respect to a program that is currently executed by the sub-processor or a program that is reserved for execution by the sub-processor. That is, when the sub-processor status is "busy", the sub-processor usage rate indicates a current usage rate, and when the sub-processor status is "reserved", the sub-processor usage rate indicates an estimated usage rate of the sub-processor to be used later.

One set of the sub-processor ID, the sub-processor status, and the sub-processor usage rate is set for one sub-processor 23, and the number of sets which corresponds to the sub-processors 23 in one information processing controller is set.

A main-memory total capacity and a main-memory usage amount indicate the total capacity and the currently used capacity, respectively, of the main memory 26 connected to the information processing controller.

The number of external storage units indicates the number of external storage units 28 connected to the information processing controller. An external-storage-unit ID is information for uniquely identifying one external storage unit 28 connected to the information processing controller. An external-storage-unit type ID indicates the type of the external storage unit (e.g., a hard disk, CD±RW, DVD±RW, memory disk, SRAM, or ROM).

An external-storage-unit total capacity and an external-storage-unit usage amount indicate the total capacity and the currently used capacity, respectively, of the external storage unit 28 identified by the external-storage-unit ID.

One set of the external-storage-unit ID, the external-storage-unit type ID, the external-storage-unit total capacity, and the external-storage-unit usage amount is set for one external storage unit 28, and the number of sets is set according to the number of external storage units 28 connected to the information processing controller. That is, when multiple external storage units are connected to one information processing controller, different external-storage-unit IDs are assigned to the respective external storage units, and the external-storage-unit type IDs, the external-storage-unit total capacities, and the external-storage-unit usage amounts are also managed independently from each other.

A-4. Execution of Software Cell

The main processor 21 included in the information processing controller in one information processing apparatus generates a software cell having the structure described above and transmits the software cell to another information processing apparatus and the information processing controller in the information processing apparatus through the network 9. An information processing apparatus serving as a transmission source, an information processing apparatus serving as a transmission destination, an information processing apparatus serving as a response destination, and the information processing controller in each apparatus are identified by the corresponding transmission-source ID, transmission-destination ID, and response-destination ID described above.

The main processor 21 included in the information processing controller in an information processing apparatus that has received the software cell stores the software cell in the main memory 26. The main processor 21 of the transmission destination reads the software cell and processes the DMA commands contained therein.

Specifically, the main processor 21 of the transmission destination first executes the load command. In response, information is loaded from a main-memory address indicated by the load command into a predetermined region in the LS 24 in a sub-processor, the predetermined area being identified by the sub-processor ID and the LS address contained in the load command. The information loaded in this case is a sub-processor program or data contained in the received software cell, or other specified data.

Next, the main processor 21 outputs a kick command, together with the program counter contained therein, to a sub-processor specified by a sub-processor ID contained in the kick command.

The specified sub-processor executes the sub-processor program in accordance with the kick command and the program counter. After its execution result is stored in the main memory 26, a notification indicating that the execution is completed is issued to the main processor 21.

In the information processing controller in the information processing apparatus serving as the transmission destination, the processor for executing the software cell is not limited to the sub-processor 23. It is also possible to specify the main processor 21 so that it executes a main-memory program, such as a functional program, contained in the software cell.

In this case, the information processing apparatus that serves as the transmission source transmits, to the information processing apparatus of the transmission destination, a software cell that contains a main-memory program and data to be processed by the main-memory program, instead of the sub-processor program, and that contains a DMA command serving as a load command. The information processing apparatus of the transmission source then causes the main-memory program and the data processed thereby to be stored in the main memory 26.

Next, the information processing apparatus of the transmission source transmits, to the information processing apparatus that serves as the transmission destination, a software cell that contains a DMA command serving as the kick command or the functional-program execution command and that contains a main processor ID and a main-memory address as to the information processing controller in the information processing apparatus of the transmission source, an identifier for identifying the main-memory program such as a functional-program ID described below, and a program counter. The information processing apparatus of the transmission source then causes the main processor 21 to execute the main-memory program.

As described above, in the network system according to the present embodiment, an information processing apparatus serving as a transmission source transmits a sub-processor program or a main-memory program in the form of a software cell to an information processing apparatus serving as a transmission destination, and also causes the sub-processor program to be loaded into the sub-processor 23 included in the information processing controller in the information processing apparatus serving as the transmission destination, so that the information processing apparatus serving as the transmission destination can execute the sub-processor program or the main-memory program.

When the program contained in the received software cell is a sub-processor program, the information processing controller in the information processing apparatus serving as the transmission source loads the sub-processor program into a specified sub-processor. The information processing controller then causes the sub-processor program or the main-memory program contained in the software cell to be executed.

Accordingly, without the user operating the information processing apparatus serving as a transmission destination, the sub-processor program or the main-memory program can be automatically executed by the information processing controller in the information processing apparatus serving as the transmission destination.

In this manner, an information processing apparatus can obtain, when its own information processing controller does not have a sub-processor program or a main-memory program such as a functional program, the program from another information processing apparatus connected to the network. Further, sub-processors can transfer data therebetween based on a DMA system. Also, even when one information processing controller needs to process data in multiple stages, the use of the above-described sandboxes allows the processing to be executed at a high speed and with high security.

A-5. Distributed Processing as Network System

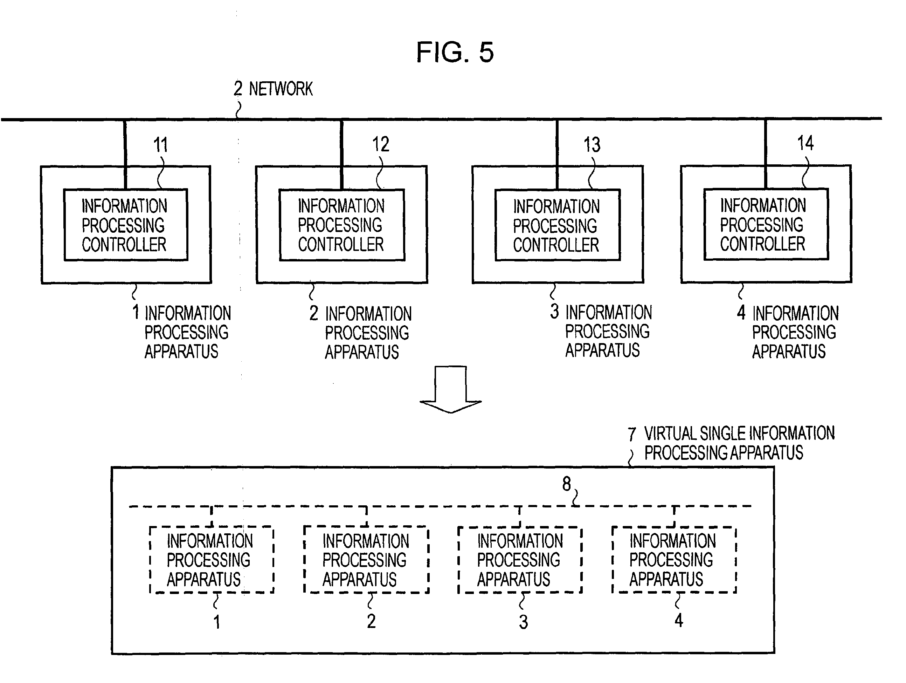

FIG. 5 shows a state in which multiple information processing apparatuses operate as a virtual single information processing apparatus. As a result of distributed processing using software cells, the information processing apparatuses 1, 2, 3, and 4 connected to the network 9, as shown in the upper section in figure, operate as a virtual single information processing apparatus 7, as shown in the lower section in the figure. However, in order to achieve such a virtual operation, it is required that processing as described below be executed by a configuration as described below.

A-6. Software Configuration of System and Loading of Program

FIG. 6 shows the configuration of software stored in the main memory 26 in each information processing controller. The software (programs) is recorded in the external storage units 28 connected to the information processing controller, before the power is supplied to the information processing apparatus. The programs are classified by their functions or features into control programs, functional programs, and device drivers.

The same control programs are included in the information processing controllers. The control programs are executed by the main processor 21 in each information processing controller and include an MS (master/slave) manager and a capability exchange program, which are described below.

The functional programs are executed by the main processor 21, and functional programs for recording, playback, and material search, and so on corresponding to the information processing apparatus are provided for each information processing controller.

The device drivers are used for input/output (transmission/reception)- for the information processing controller (the information processing apparatus), and drivers for broadcast reception, monitor output, bit-stream input/output, network input/output, and so on corresponding to the information processing apparatus are provided for each information processing controller.

In a state in which the information processing apparatus is physically connected to the network 9 by cable plugging or the like, when the main power is supplied to the information processing apparatus to cause the information processing apparatus to be both electrically and functionally connected to the network 9, the main processor 21 in the information processing controller in the information processing apparatus loads each program belonging to the control programs and each program belonging to the device drivers into the main memory 26.

In the procedure of loading the programs, the main processor 21 first causes the DC 27 to execute a read command to read a program from the external storage unit 28 and then causes the DMAC 25 to execute a write command to write the read program to the main memory 26.

Each program belong to the functional programs may be configured so that only a necessary program is loaded into the memory when required. Alternatively, similarly to programs belonging to other categories, each program belonging to the functional programs may also be configured so that the program is loaded immediately after the supply of the main power.

Each program belonging to the functional programs does not have to be recorded in the external storage units 28 of all information processing apparatuses connected to the network. That is, as long as a program belonging to the functional programs is recorded in the external storage unit 28 of one of the information processing apparatuses, it can be loaded from another information processing apparatus by the method described above. Consequently, as shown in the lower section in FIG. 5, the functional program can be executed by the virtual single information processing apparatus 7.

In this case, the functional program processed by the main processor 21, as described above, may operate in cooperation with a sub-processor program processed by the sub-processor 23. Thus, when the main processor 21 reads the functional program from the external storage unit 28 and a sub-processor program that operates in cooperation with a target functional program exists during writing, the sub-processor program is also written together to the same main memory 26. In this case, the number of sub-processor programs that operate in cooperation with each other may be one or may be two or more. When the number of sub-processor programs is two or more, all sub-processor programs that operate in cooperation with each other are written to the main memory 26. The sub-processor programs written to the main memory 26 are then written to the LS 24 in the sub-processor 23 and operate in cooperation with the functional program processed by the main processor 21.

Also, sub-processor program IDs are assigned to the sub-processor programs to allow the sub-processor programs to be uniquely identified. The assigned sub-processor program ID may be an identifier associated with the functional-program ID of a functional program with which a sub-processor program operates in cooperation, for example, an identifier in which a functional-program ID is used as a parent number and a branch number is added to the end of the parent number. Alternatively, the assigned sub-processor program ID may be an identifier that is not associated with the functional-program ID of a functional program with which the sub-processor program operates in cooperation. In any case, when a functional program and a sub-processor program operate in cooperation with each other, each of the programs needs to store the program ID of the other program, the program ID being the identifier thereof, in its own program. Also, when a functional program operates in cooperation with multiple sub-processor programs, the functional program also stores the sub-processor program IDs of all the sub-processor programs.

As shown in the software cell in FIG. 3, an identifier that allows each functional program to be uniquely identified is assigned, as a functional-program ID, to the functional program. The functional-program ID is determined based on creation date and time and the information-processing-apparatus ID, during the creation of the functional program.

The main processor 21 reserves, in the main memory 26, a region for storing the apparatus information (information regarding the operation state) of the information processing apparatus in which the main processor 21 operates, and records the apparatus information as an apparatus-information table for the information processing apparatus. The apparatus information referred to herein means pieces of information subsequent to the information-processing-apparatus ID in the data region of the status return command shown in FIG. 4.

A-7. Determination of Master/Slave in System

In the network system described above, after the main power for one information processing apparatus is supplied, the main processor 21 in the information processing controller in the information processing apparatus loads a master/slave manager (hereinafter referred to as an "MS manager") into the main memory 26 and executes the MS manager.

When the MS manager detects that the information processing apparatus on which it operates is connected to the network 9, it checks the presence of another information processing apparatus connected to the same network 9. The term "connection" or "presence" in this case does not only indicate that the information processing apparatus is physically connected to the network 9, but also indicates that the information processing apparatus is both electrically and functionally connected to the network 9, as described above.

The information processing apparatus on which the MS manager operates is referred to as a "self apparatus" and another information processing apparatus is referred to as "another apparatus." The apparatus also refers to the information processing apparatus.

A method in which the MS manager checks the presence of another information processing apparatus connected to the same network 9 will be described below.

The MS manager generates a software cell that contains a DMA command serving as a status request command, the transmission-source ID and the response-destination ID indicating the information processing apparatus, and an unspecified transmission-destination ID. The MS manager then transmits the software cell to the network to which the information processing apparatus is connected, and sets a network-connection checking timer. The timeout time of the timer is, for example, 10 minutes.

When another information processing apparatus is connected to the network system, the other apparatus receives the software cell containing the status request command and transmits, to an information processing apparatus that issued the status request command and that is identified by the response-destination ID, a software cell that contains a DMA command serving as a status return command and that contains, as data, the apparatus information of the self apparatus (the other apparatus). The software cell containing the status return command contains at least information for identifying the other apparatus (examples of the information include an information processing apparatus ID, information regarding the main processor, and information regarding the sub-processors) and the MS status of the other apparatus.

The MS manager of the information processing apparatus that issued the status request command monitors the reception of a software cell containing a status return command transmitted from another device on the network until the network-connection checking timer times out. As a result, when a status return command indicating MS status = 0 (master apparatus) is received, the MS status in the apparatus-information table of the self apparatus is set to 1. Consequently, the apparatus becomes a slave apparatus.

On the other hand, when no status return command is received until the network-connection checking timer times out or when a status return command indicating MS status = 0 (master apparatus) is not received, the MS status in the apparatus-information table of the self apparatus is set to 0. Consequently, the apparatus becomes a master apparatus.

That is, in a state in which any apparatus is not connected to the network 9 or a master apparatus does not exist on the network 9, when a new information processing apparatus is connected to the network 9, this apparatus is automatically set to a master apparatus. On the other hand, in a state in which a master apparatus already exists on the network 9, when a new information processing apparatus is connected to the network 9, this apparatus is automatically set to a slave apparatus.

In either case of a master apparatus and a slave apparatus, the MS manager monitors the states of other apparatuses by periodically transmitting the status request command to the other apparatuses on the network 9 and making an inquiry about the status information. As a result, when the connection state of the network 9 changes, e.g., when a status return command is not returned from another specific apparatus in a predetermined period preset for determination or when a new information processing apparatus is connected to the network 9, due to the cutoff of the main power for the information processing apparatus connected to the network 9 or the disconnection of the information processing apparatus from the network 9, information representing the change is sent to a capability exchange program described below.

A-8. Acquisition of Apparatus Information in Master Apparatus and Slave Apparatus

When the main processor 21 receives, from the MS manager, a notification indicating an inquiry about another information processing apparatus connected to the network 9 and completion of the MS status setting of the self apparatus, the main processor 21 executes the capability exchange program.

When the self apparatus is a master apparatus, the capability exchange program acquires apparatus information regarding all other information processing apparatuses connected to the network 9, i.e., the apparatus information of each slave apparatus.

As described above, the apparatus information of another apparatus can be acquired by generating a software cell that contains a DMA command serving as a status request command, transmitting the software cell to the other apparatus, and then receiving a software cell that contains a DMA command serving as a status return command and that contains, as data, the apparatus information of the other apparatus.

In the same manner as the apparatus-information table of the self apparatus serving as a master apparatus, the capability exchange program reserves, in the main memory 26 of the self apparatus, a region for storing the apparatus information regarding all other apparatuses (slave apparatuses) connected to the network 9 and records the apparatus information in the form of apparatus-information tables for the other apparatuses (slave apparatuses). That is, the apparatus information of all information processing apparatuses connected to the network 9, including the self apparatus, is recorded in the main memory 26 of the master apparatus in the form of apparatus-information tables.

On the other hand, when the self apparatus is a slave apparatus, the capability exchange program acquires the apparatus information regarding all other apparatuses connected to the network 9, i.e., the apparatus information of each slave apparatus other than the master apparatus and the self apparatus, and records the information-processing-apparatus IDs and the MS statuses contained in the apparatus information into the main memory 26 of the self apparatus. That is, in the main memory 26 of the slave apparatus, the apparatus information of the self apparatus is recorded in the form of an apparatus-information table and also the information-processing-apparatus IDs and the MS statuses of the master apparatus and all slave apparatuses connected to the network 9, other than the self apparatus, are recorded in the form of other-apparatus-information tables.

In addition, with respect to any of the master apparatus and slave apparatuses, when the capability exchange program receives, from the MS manager, a notification indicating that an information processing apparatus is newly connected to the network 9, as describe above, the capability exchange program acquires the apparatus information of the information processing apparatus and records the apparatus information into the main memory 26, as described above.

The MS manger and the capability exchange program do not necessarily have to be executed by the main processor 21, but also may be executed by any of the sub-processors 23. It is also desired that the MS manger and the capability exchange program be resident programs that constantly operate while the main power for the information processing apparatus is supplied.

A-9. When Information Processing Apparatus is disconnected from Network

As described above, with respect to any of the master apparatus and slave apparatuses, when the capability exchange program receives, from the MS manager, a notification indicating that the main power for an information processing apparatus connected to the network 9 is cut off or an information processing apparatus is disconnected from the network 9, the capability exchange program deletes the apparatus-information table of the information processing apparatus from the main memory 26 of the self apparatus.

In addition, when an information processing apparatus disconnected from the network 9, as described above, is a master apparatus, a new master apparatus is determined by a method as described below.

For example, an information processing apparatus that is not disconnected from the network 9 replaces the information-processing-apparatuses IDs of the self apparatus and other apparatuses with numerical values, and compares the information-processing-apparatus ID of the self apparatus with the information-processing-apparatus IDs of the other apparatuses. When the information-processing-apparatus ID of the self apparatus is the minimum among the information processing apparatuses that are not disconnected from the network 9, the slave apparatus changes to a master apparatus and sets the MS status to 0. As a master apparatus, the apparatus further acquires apparatus information from all other information processing apparatuses (slave apparatuses) connected to the network and records the apparatus information in the main memory 26, as described above.

A-10. Distributed Processing based on Apparatus Information

In order to cause the multiple information processing apparatuses 1, 2, 3, and 4 connected to the network 9 to operate as the virtual single information processing apparatus 7, as shown in the lower section in FIG. 5, it is required that the master apparatus recognizes user operations and the operation states of slave apparatuses.

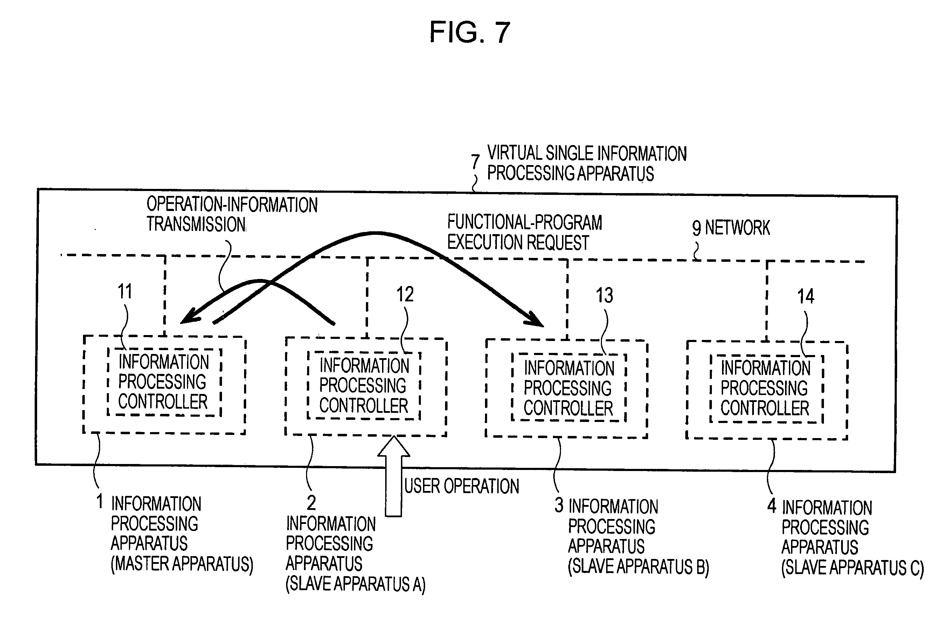

FIG. 7 shows a state in which four information processing apparatuses operate as the virtual single information processing apparatus 7. In the illustrated example, it is assumed that the information processing apparatus 1 operates as a master apparatus and the information processing apparatuses 2, 3, and 4 operate as slave apparatuses A, B, and C, respectively.

When the user operates an information processing apparatus connected to the network 9 and the apparatus is the master apparatus 1, information of the operation is directly recognized by the master apparatus 1. When the operated apparatus is a slave apparatus, information of the operation is transmitted from the slave apparatus to the master apparatus 1. That is, regardless of whether the apparatus operated by the user is the master apparatus 1 or any of the slave apparatuses, the operation information is always recognized by the master apparatus 1. The operation information is transmitted using, for example, a software cell containing a DMA command serving as an operation-information transmission command.

In accordance with the operation information, the main processor 21-1 included in the information processing controller 11 in the master apparatus 1 selects a functional program to be executed. During the selection, the main processor 21-1 included in the information processing controller 11 in the master apparatus 1 loads a functional program from the external storage unit 28-1 or 28-2 of the self apparatus into the main memory 26-1 by the above-described method, when required. Another information processing apparatus (a slave apparatus), however, may transmit a functional program to the master apparatus 1.

The functional program specifies apparatus-related requirement specifications (refer to FIG. 4), which are required every time it is executed. Examples of the requirement specifications include an information-processing-apparatus type ID, a main-processor or sub-processor processing capability, a main-memory usage amount, and conditions regarding the external storage units.

The main processor 21-1 included in the information processing controller 11 in the master apparatus 1 reads the requirement specifications needed for each functional program. The main processor 21-1 also refers to the apparatus-information tables, pre-recorded in the main memory 26-1 by the capability exchange program, to read the apparatus information of each information processing apparatus. The apparatus information in this case refers to pieces of information subsequent to the information-processing-apparatus ID shown in FIG. 4 and is information regarding the main processor, sub-processors, main memory, and external storage units.

The main processor 21 included in the information processing controller 11 in the master apparatus 1 sequentially compares the above-described apparatus information of each information processing apparatus connected to the network 9 with the above-described requirement specifications needed for executing the functional program.

For example, when the functional program requires a video-recording function, only an information processing apparatus having a video-recording function is identified and extracted based on the information-processing-apparatus type ID. Further, a slave apparatus that can ensure the main-processor or sub-processor processing capability, main-memory usage amount, and external-storage-unit-related conditions, which are needed for executing the function program, is identified as an execution-request candidate apparatus. When multiple execution-request candidate apparatuses are identified in this case, one of the execution-request candidate apparatuses is specified and selected.

When a slave apparatus to which an execution request is to be issued is specified, the main processor 21-1 included in the information processing controller 11 in the master apparatus 1 updates the apparatus-information table of the specified slave apparatus, the apparatus information tale being recorded in the main memory 26-1 included in the information processing controller 11 in the self apparatus.

The main processor 21-1 included in the information processing controller 11 in the master apparatus 1 further generates a software cell containing a DMA command serving as a functional-program execution command and sets, in the cell interface of the software cell, the sub-processor information and the sandbox size (see FIG. 3) needed for the functional program. The main processor 21-1 then transmits the software cell to the slave apparatus to which the execution request is to be issued.

The slave apparatus to which the functional-program execution request was issued executes the functional program and updates the apparatus-information table of the self apparatus. During the processing, when required, the main processor 21 included in the information processing controller in the slave apparatus loads a functional program and a sub-processor program that operates in cooperation with the functional program from the external storage unit 28 of the self apparatus into the main apparatus 26 by the above-described method.

The system may be configured such that, when a necessary functional program or a sub-processor program that operates in cooperation with the functional program is not recorded in the external storage units 28 of the slave apparatus to which a functional-program execution request was issued, another information processing apparatus transmits the functional program or sub-processor program to the slave apparatus to which the functional-program execution request was issued.

The sub-processor program can also be executed by another information processing apparatus through the use of the aforementioned load command and kick command.

After executing the functional program, the main processor 21 included in the information processing controller in the slave apparatus that has executed the functional program transmits a completion notification to the main processor 21-1 included in the information processing controller 11 in the master apparatus 1 and also updates the apparatus-information table of the self apparatus. The main processor 21-1 included in the information processing controller 11 in the master apparatus 1 receives the completion notification and updates the apparatus-information table of the slave apparatus that has executed the functional program.

The main processor 21-1 included in the information processing controller 11 in the master apparatus 1 may select itself as an information processing apparatus that can execute the functional program, based on the result of reference to the apparatus-information tables of the self apparatus and other apparatuses. In this case, the master apparatus 1 executes the functional program.

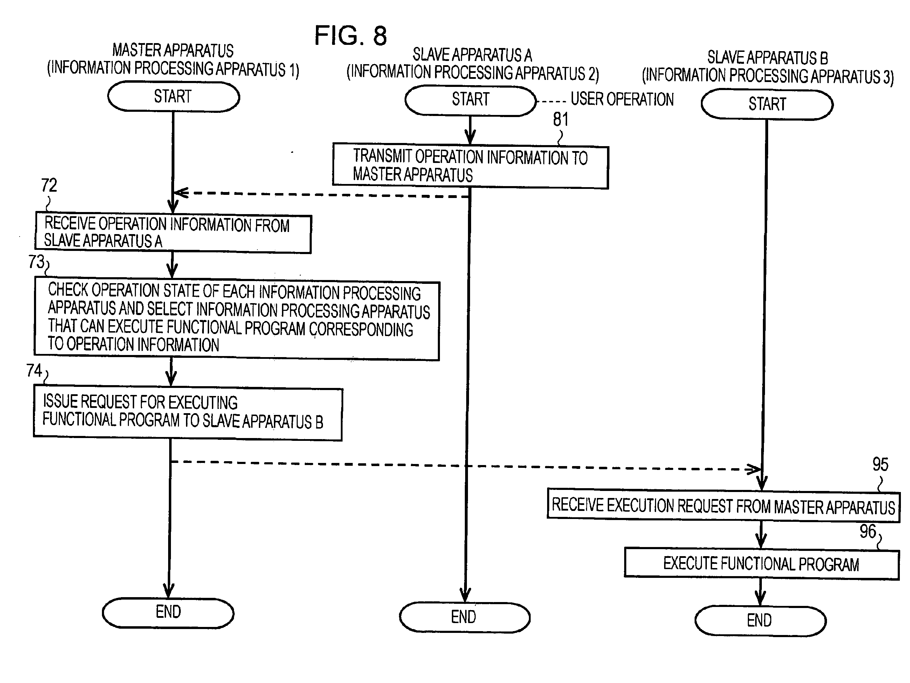

Distributed processing performed, in the example shown in FIG. 7, when the user operates the slave apparatus A (the information processing apparatus 2) and another slave apparatus B (the information processing apparatus 3) executes a functional program corresponding to the operation will be described with reference to FIG. 8.

In the example shown in FIG. 8, when the user operates the slave apparatus A, distributed processing of the entire network system including the slave apparatus A is started, and first, the slave apparatus A transmits information of the operation to the master apparatus 1 (step 81).

The master apparatus 1 receives the operation information (step 72). The master apparatus 1 further checks the operation state of each information processing apparatus based on the apparatus-information tables of the self apparatus and other apparatuses, the apparatus-information tables being recorded in the main memory 26-1 of the self apparatus, and selects an information processing apparatus that can execute a functional program corresponding to the received operation information (step 73). A case in which the slave apparatus B is selected is shown in the illustrated example.

Next, the master apparatus 1 issues a request for executing the functional program to the selected slave apparatus B (step 74)

The slave apparatus B receives the execution request (step 95) and further executes the functional program for which the execution request was issued (step 96).

As described above, by operating only one information processing apparatus, the user can cause the multiple information processing apparatuses 1, 2, 3, and 4 to operate as the virtual single information processing apparatus 7, without operating the other information processing apparatuses.

A-11. Specific Example of each Information Processing Apparatus and System

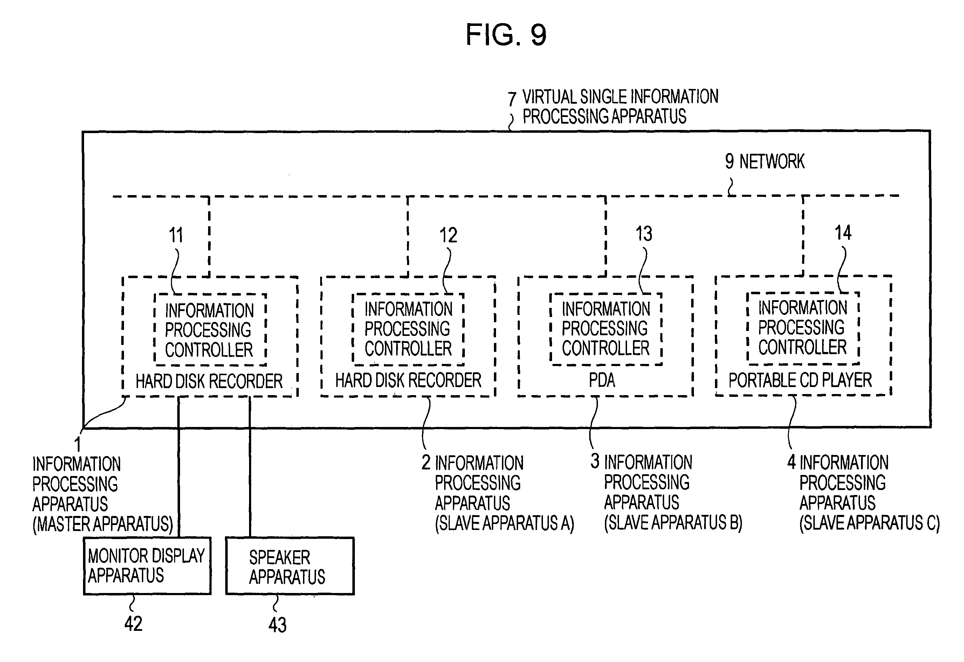

The information processing apparatuses 1, 2, 3, and 4 interconnected through the network 9 may essentially have any configuration as long as they are designed so that information processing controllers 11, 12, 13, and 14 as described above process information. FIG. 9 shows one example of the configuration of the information processing apparatus(s).

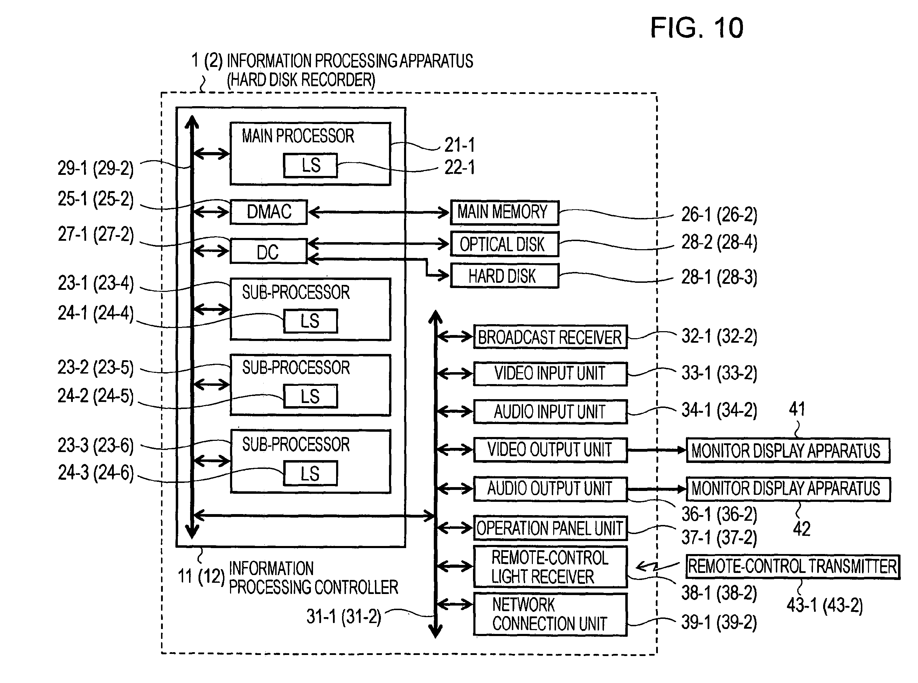

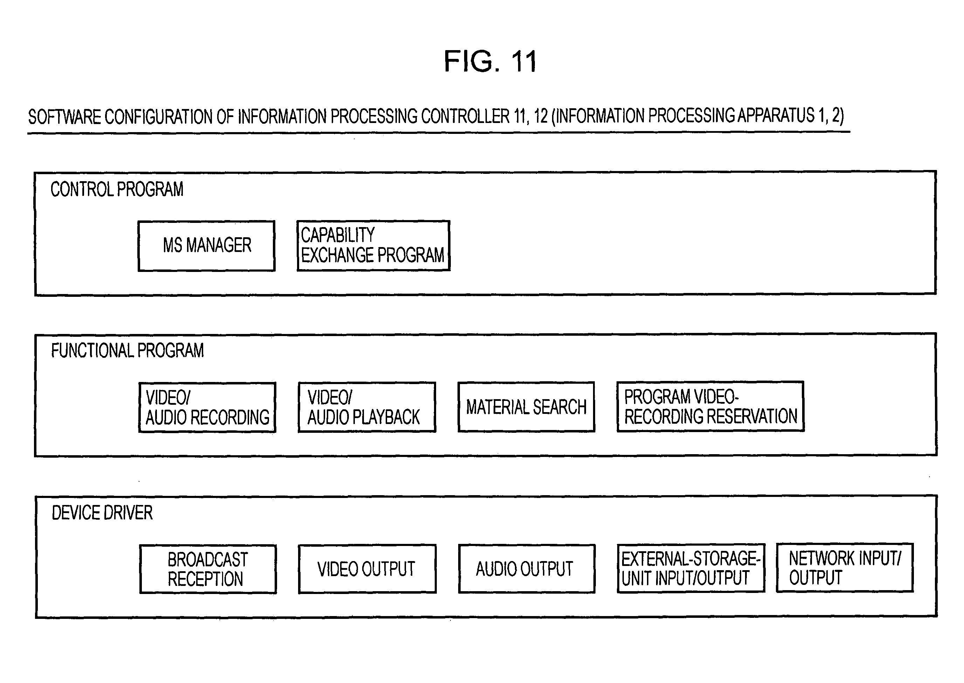

One example of the information processing apparatus 1 having the information processing controller 11 is a hard-disk recorder. FIGS. 10 and 11 show the hardware configuration and the software configuration, respectively, of the hard-disk recorders shown in FIG. 9. The hardware of the hard-disk recorder is configured so that a hard disk can be incorporated as an external storage unit 28-1 shown in FIG. 1 and an optical disk, such as a DVD±R/RW, CD±R/RW, or Bluray-Disc (registered trademark), can be loaded as the external storage unit 28-2 shown in FIG. 1. In addition, a broadcast receiver 32-1, a video input unit 33-1, an audio input unit 34-1, a video output unit 35-1, an audio output unit 36-1, an operation panel unit 37-1, a remote-control light receiver 38-1, and a network connection unit 39-1 are connected to a bus 31-1, which is connected to the bus 29-1 of the information processing controller 11.

The broadcast receiver 32-1, the video input unit 33-1, and the audio input unit 34-1 receive broadcast signals or input video signals and audio signals from the outside of the information processing apparatus 1, convert the signals into digital data having respective predetermined formats, and send the digital data to the bus 31-1 for processing by the information processing controller 11. The video output unit 35-1 and the audio output unit 36-1 process the respective video data and audio data sent from the information processing controller 11 to the bus 31-1 and transmit the digital data or converted analog signals to the outside of the information processing apparatus 1. The remote-control light receiver 38-1 receives remote-control (remote-operation) infrared signals from a remote-control transmitter 43-1.

As shown in FIGS. 9 and 10, a monitor display apparatus 41 and a speaker apparatus 42 are connected to the video output unit 35-1 and the audio output unit 36-1 of the information processing apparatus (the hard-disk recorder) 1.

The information processing apparatus 2 having an information processing controller 12, illustrated in FIG. 9, is also configured to function as a hard-disk recorder in the same manner as the information processing apparatus 1, as shown inside the surrounded area in FIG. 10 with reference numerals. As shown in FIG. 9, however, a monitor display apparatus and a speaker apparatus are not connected to the information processing apparatus (the hard-disk recorder) 2.

As shown in FIG. 11, in the software configuration of the information processing apparatuses (the hard-disk recorders) 1 and 2, i.e., of the information processing controllers 11 and 12, an MS manager and a capability exchange program are provided as control programs; programs for video/audio recording, video/audio playback, material search, and program video-recording reservation are provided as functional programs; and programs for broadcast reception, video output, audio output, external-storage-unit input/output, and network input/output are provided as device drivers.

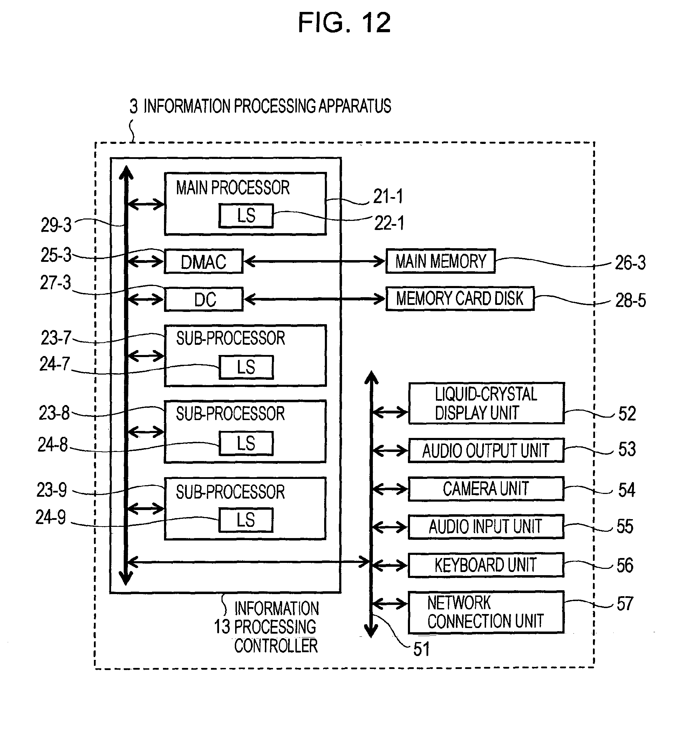

Another example of the information processing apparatus 3 having an information processing controller 13 is a PDA (personal digital assistant). FIG. 12 shows the hardware configuration of the information processing apparatus 3 configured as a PDA. In the example shown in the figure, the information processing apparatus 3 is configured so that a memory card disk can be loaded as the external storage unit 28-5 shown in FIG. 1, and a liquid-crystal-display unit 52, an audio output unit 53, a camera unit 54, an audio input unit 55, a keyboard unit 56, and a network connection unit 57 are connected to a bus 51, which is connected to a bus 29-3 of the information processing controller 13.

The information processing controller 13, whose internal configuration is omitted in FIG. 1, includes a main processor 21-3, sub-processors 23-7, 23-8, and 23-9, a DMAC (direct memory access controller) 25-3, a DC (disk controller) 27-3, and the bus 29-3. The main processor 21-3 has an LS (local storage) 22-3, and the sub-processors 23-7, 23-8, and 23-9 have LSs (local storages) 24-7, 24-8, and 24-9, respectively.

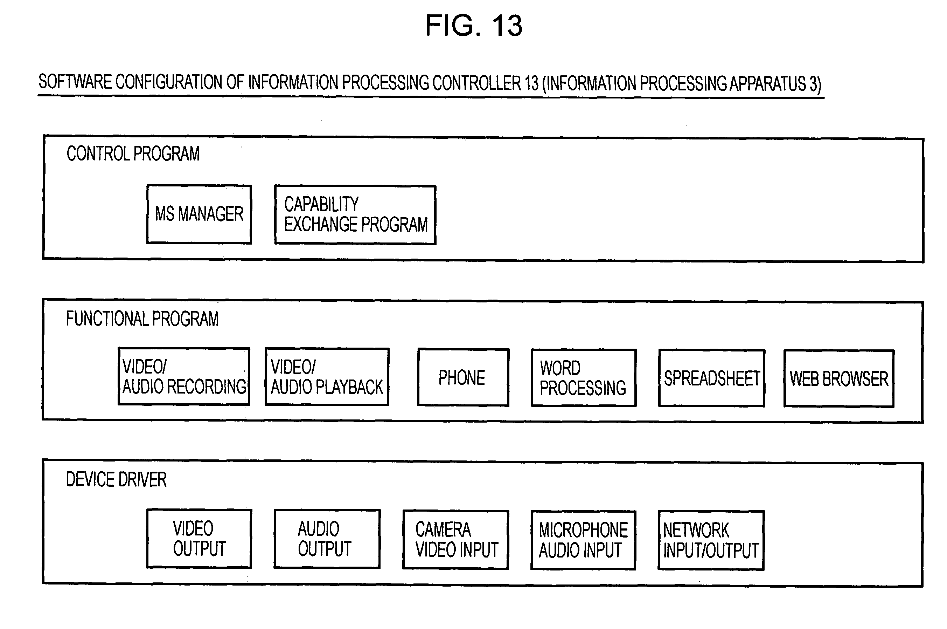

FIG. 13 shows the software configuration of the information processing apparatus (PDA) 3, i.e., the information processing controller 13. As shown in the figure, an MS manger and a capability exchange program are provided as control programs; a web browser and programs for video/audio recording, video/audio playback, a phone-address book, word processing, and spreadsheet are provided as functional programs; and programs for video output, audio output, camera video input, microphone audio input, and network input/output are provided as device drivers.

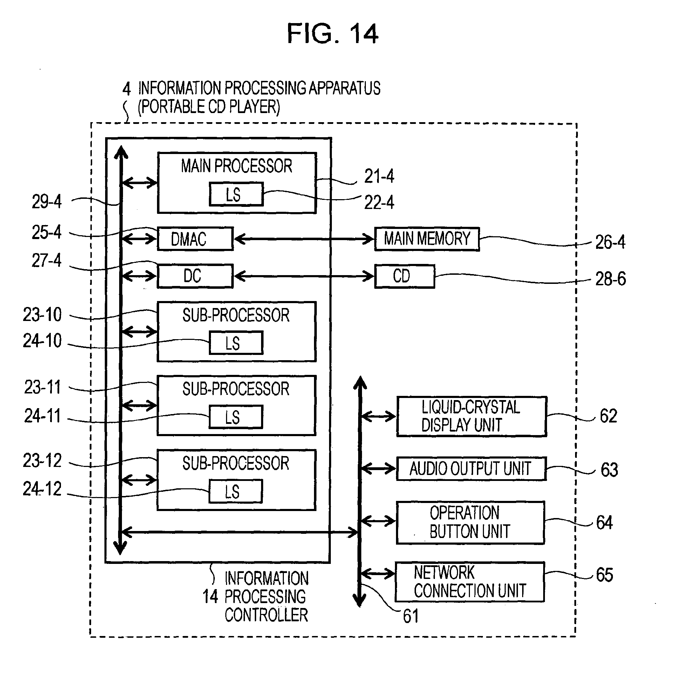

Still another example of the information processing apparatus 4 having an information processing controller 14 is a portable CD player. FIG. 14 shows the hardware configuration of a portable CD player. In the example shown in the figure, the portable CD player is configured so that a CD (compact disc) can be loaded as the external storage unit 28-6 shown in FIG. 1 and a liquid-crystal-display unit 62, an audio output unit 63, an operation button unit 64, and a network connection unit 65 are connected to a bus 61, which is connected to a bus 29-4 of the information processing controller 14.

The information processing controller 14, whose internal configuration is omitted in FIG. 1, includes a main processor 21-4, sub-processors 23-10, 23-11, and 23-12, a DMAC 25-4, a DC 27-4, and the bus 29-4. The main processor 21-4 has an LS 22-4, and the sub-processors 23-10, 23-11, and 23-12 have LSs 24-10, 24-11, and 24-12, respectively.

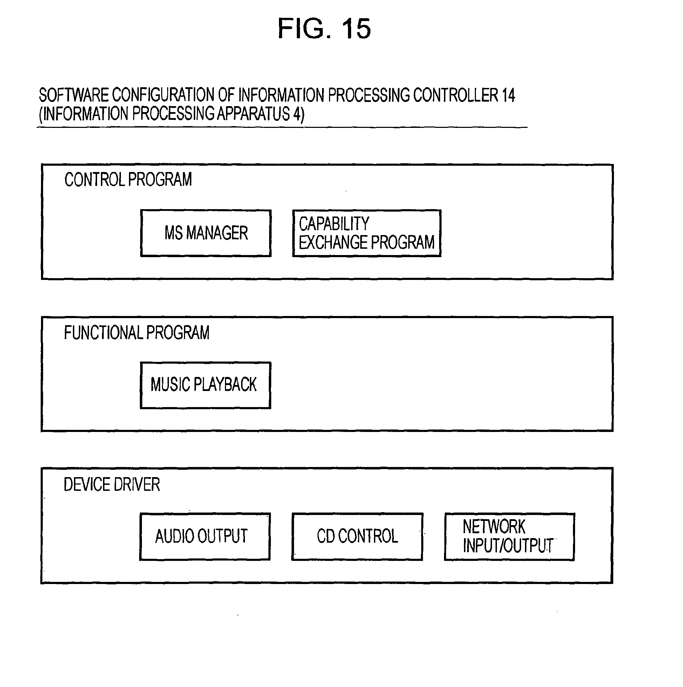

FIG. 15 shows the software configuration of the information processing apparatus (the portable CD player) 4, i.e., the information processing controller 14. As shown, an MS manger and a capability exchange program are provided as control programs, a program for music playback is provided as a functional program, and programs for audio output, CD control, and network input/output are provided as device drivers.

In the network system illustrated in FIG. 9, it is assumed that the information processing apparatuses 1, 3, and 4 are connected over the network 9, the information processing apparatus 1 is set as a master apparatus (MS status = 0), and the information processing apparatuses 3 and 4 are set as slave apparatuses (MS status = 1).

In this state, when the information processing apparatus 2 is newly connected to the network 9, the MS manager that is being executed by the main processor 21-2 included in the information processing controller 12 in the information processing apparatus 2 makes an inquiry about the MS statuses of other information processing apparatuses 3 and 4, recognizes that the information processing apparatus 1 already exists as a master apparatus, and sets the self apparatus (the information processing apparatus 2) to a slave apparatus (MS status = 1) by the method described above. The information processing apparatus 1 set to the master apparatus collects the apparatus information of apparatuses including the newly added information processing apparatus 2 and updates the apparatus-information tables in the main memory 26-1.

A description will be given below of a case in which, in such a state, the user operates the information processing apparatus (PDA) 3 serving as a slave apparatus to make a video-recording reservation of a two-hour broadcast program.

In this case, the information processing apparatus (PDA) 3 serving as a slave apparatus receives inputs of video-recording reservation information from the user. Examples of the video-recording reservation information include video-recording start time, video-recording end time, a broadcast channel for video recording, and a video-recording quality. The information processing apparatus 3 then generates a software cell containing the video-recording reservation information and a video-recording reservation command that serves as a DMA command, and transmits the software cell to the information processing apparatus 1 serving as a master apparatus.

The main processor 21-1 included in the information processing controller 11 in the information processing apparatus 1 that received the software cell containing the DMA command serving a video-recording reservation command reads the video-recording reservation command and refers to the apparatus-information tables in the main memory 26-1 to identify an information processing apparatus that can execute the video-recording reservation command.

First, the main processor 21-1 reads the information-processing-apparatus type IDs of the information processing apparatuses 1, 2, 3, and 4, the information-processing-apparatus IDs being contained in the apparatus-information tables, and extracts an information processing apparatus that can execute a functional program corresponding to the video-recording reservation command. In this case, the information processing apparatuses 1 and 2 that have information-processing-apparatus type IDs indicating video-recording functions are identified as candidate apparatuses, and the information processing apparatuses 3 and 4 are excluded from the candidate apparatuses.

Next, the main processor 21-1 included in the information processing controller 11 in the information processing apparatus 1 serving as a master apparatus refers to the apparatus-information tables and reads information regarding the apparatuses. Examples of the information include the processing capabilities of the main processors or sub-processors of the information processing apparatuses 1 and 2 and information regarding the main memories. The main processor 21-1 then determines whether or not the information processing apparatuses 1 and 2 satisfy requirement specifications needed for executing a functional program corresponding to the video-recording reservation command. It is assumed in this case that both the information processing apparatuses 1 and 2 satisfy the requirement specifications needed for executing a functional program corresponding to the video-recording reservation command.

Further, the main processor 21-1 refers to the apparatus-information tables, reads information regarding the external storage units of the information processing apparatuses 1 and 2, and determines whether or not the available capacity of each external storage unit satisfies the capacity needed for executing the video-recording reservation command. Since the information processing apparatuses 1 and 2 are hard-disk recorders, the difference between the total capacity and the usage amount of each of the hard disks 28-1 and 28-3 corresponds to the available capacity.

In this case, the available capacity of the hard disk 28-1 of the information processing apparatus 1 is 10 minutes in terms of a video-recording time and the available capacity of the hard disk 28-3 of the information processing apparatus 2 is 20 hours in terms of a video-recording time.

In this case, the main processor 21-1 included in the information processing controller 11 in the information processing apparatus 1 serving as a master apparatus identifies, as a slave apparatus to which an execution request is to be issued, an information processing apparatus that can reserve an available capacity of two hours required for executing the video-recording reservation command.

As a result, only the information processing apparatus 2 is selected as a slave apparatus to which the execution request is to be issued. Thus, the main processor 21-1 included in the information processing controller 11 in the information processing apparatus 1 serving as a master apparatus transmits, to the information processing apparatus 2, the video-recording reservation command containing the video-recording reservation information transmitted from the information processing apparatus 3 operated by the user to request execution of the video-recording reservation of the aforementioned two-hour broadcast program.

The main processor 21-2 included in the information processing controller 12 in the information processing apparatus 2 analyzes the video-recording reservation command, loads a functional program required for the video-recording from the hard disk 28-3, which is an external storage unit, into the main memory 26-2, and executes video recording in accordance with the video-recording reservation information. As a result, video/audio data for the two-hour broadcast program for which a video-recording reservation was made is recorded on the hard disk 28-3 of the information processing apparatus 2.

As described above, in the network system in the example of FIG. 9, by operating only one information processing apparatus, the user can also cause the multiple information processing apparatuses 1, 2, 3, and 4 to operate as the virtual single information processing apparatus 7 without operating the other information processing apparatuses.

B. Execution of Image Processing by Sub-Processor

As described above, the information processing system according to the present invention has a multi-processor configuration that includes one or more sub-processors each capable of executing a program loaded on its own local storage and a main processor for giving an instruction for executing the program to the sub-processor(s). According to such an information processing system having the multi-processor configuration, processing that becomes a high-load processing for one processor can be processed in a distributed manner through a cooperation of sub processors, or two or more associated data-processing operations can be executed in a synchronous and cooperated manner. Thus, it is possible to provide users with highly-functional and high-value added services.

The processors share the main memory via the system bus and processing data in the system is loaded on the main memory. The main processor assigns processing of data on the main memory to the sub-processors and gives an instruction for executing the processing. The sub-processor loads a sub-processor program for executing the data processing, launches the program in accordance with the instruction from the main processor, and executes processing of the data on the main memory.

In this case, the main memory has a relatively large capacity and employs a DRAM that is low in cost per storage capacity. Thus, there are problems in that the latency between the sub-processors and the main memory is large and the sub-processors conflict with each other to access the main memory.

In the system having the multi-processor configuration according to the present invention, each sub-processor has a dedicated local storage. Thus, during processing of data on the main memory, each sub-processor can prevent the conflict in accessing the main memory and a traffic increase in the system, by using its own local storage as the so-called "cache memory." However, the advantage cannot be fully utilized unless the cache hit rate is sufficiently high. Thus, adaptively controlling the cache area so that the rate of hitting cache on the local storage increases in subsequent processing is deemed to be necessary in order to improve the performance of data processing by the sub-processors and the performance of the entire system.

The following description will be given of details of adaptive control of a cache area of the local storages in the embodiment in which the information processing system having the multi-processor configuration deals with image processing.

The main processor can assign decoding processing of a compressed image to one sub-processor. In this case, the main processor can further issue, to another sub-processor, an instruction for performing other processing on decoded image data, such as image-quality enhancement processing for editing image data to the user's preferred quality and re-encoding processing for re-encoding image data into another encoding system, so as to achieve a coordinated operation as the entire system.

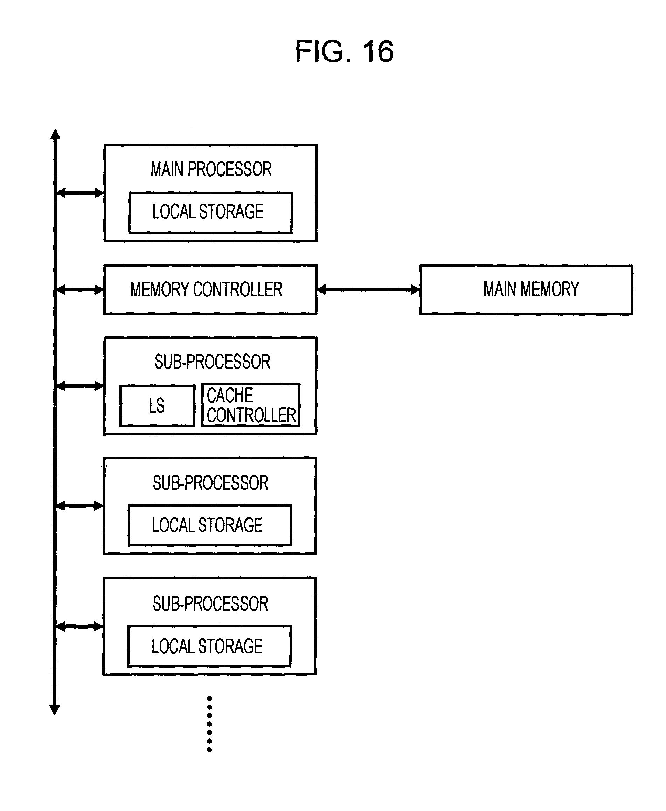

FIG. 16 schematically shows the functional configuration of a system having a multi-processor configuration when one sub-processor performs image decoding processing. It is assumed that the illustrated system has the following features.

(1) Each sub-processor has a dedicated local storage.
(2) Each sub-processor does not directly access the local storage other than its own one.
(3) A relatively low-speed memory device, such as a DRAM, is used as the main memory.
(4) The sub-processor has a system for caching an area of the main memory into the local storage, as needed.

In this case, in the image encoding/decoding processing, an entire frame is divided into small regions called macroblocks to perform signal processing. For example, basic compression algorithms for MPEG, which is one of standard image compression standards, are as follows.

(1) Information compression based on temporal screen correlation is performed using a macroblock as an encoding unit.
(2) A macroblock is segmented into sub-blocks and spatial information compression using DCT is performed.
(3) Variable length coding is performed utilizing motion-compensation inter-frame prediction and so on.
(4) Quantization scale control of a DCT coefficient is employed to control the total amount of code generated.

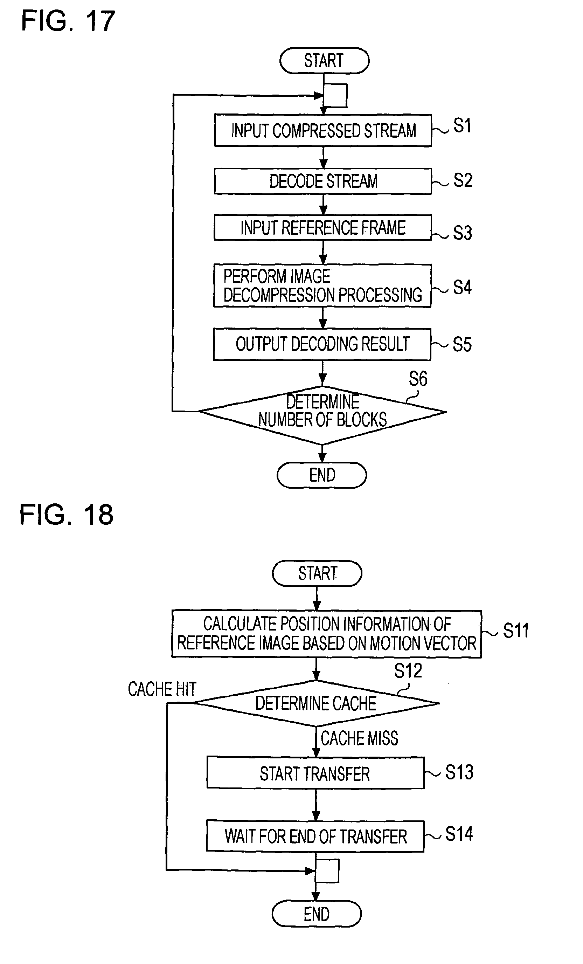

Also, in the image compression, inter-frame coding is performed to compress difference information between a frame to be compressed and a frame serving as a reference. FIG. 17 shows, in a flow chart, a basic operation procedure for decoding compressed image signals.

As shown, in the processing flow of compressed-image decoding, a series of processing, i.e., inputting of a compressed stream (step S1), decoding of the stream (step S2), inputting of a reference frame (step S3), processing of decompressing the image (step S4), and outputting of a decoding result (step S5), is performed for each frame via determination of the number of blocks (step S6).

In the processing in steps S1, S3, and S5, data is transferred between the main memory and the local storage. The inter-memory data transfer is performed via the system bus shared by multiple modules. As described above, in order to prevent a performance decrease in the entire decoding system which is caused by performance deterioration of the bus transfer, the sub-processor needs to have a cache to improve the performance of the inter-memory transfer.

In the transferring for inputting a stream in step S1, the stream is serially arranged on the memory and is sequentially processed. Thus, cache control can be simplified and also no cache miss occurs.

In the decoding-result output in step S5, output results for multiple macroblocks are not written to the same address, and an output result is not read during processing of another macroblock until decoding processing of the entire frame is completed. Therefore, a decoding result can be transferred to the main memory out of synchronization with the decoding processing of a subsequent macroblock, so that a performance decrease can be suppressed and the use of a cache is not required.

Now, the reference-frame inputting in step S3 will be discussed. In the image compression processing, only the difference information between a frame to be compressed and a frame serving as a reference is transmitted and inter-frame coding for enhancing the compression efficiency is performed (as described above). In this case, reference-image data used for generating the difference information needs to be obtained for the decoding processing.

The position of image data used for prediction in the reference frame can be obtained by using a motion vector encoded in the stream. It is achieved by the processing procedure shown in a flow chart in FIG. 18.

First, a reference position in the reference frame is calculated based on a motion vector (step S11). A determination is made as to whether or not image data at the calculated reference position is cached in the local storage (step S12). When there is no corresponding data in the local storage, i.e., when a cache miss occurs, the cache area is transferred from the main memory (steps S13 and S14)

In a typical cache operation, data of a contingent region is cached at a memory address to which the sub-processor accessed. In accordance with this method, in the reference-frame caching processing, data around the reference image are uniformly cached. However, the cache miss probability in the subsequent macroblock processing may increase depending on the image motion.

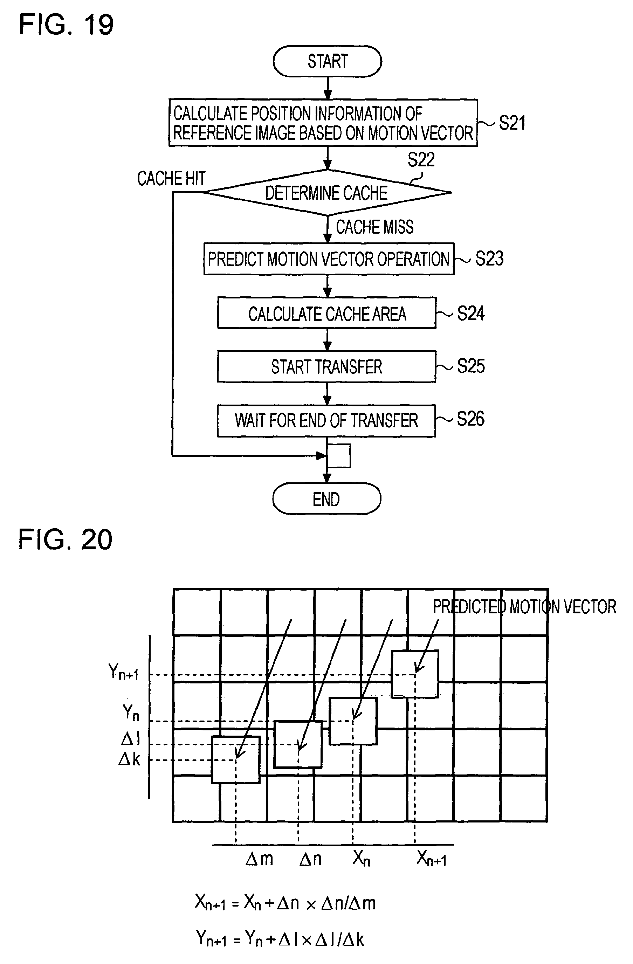

Accordingly, in the present embodiment, based on the surrounding motion vectors used for the macroblock processing, regions to be cached are adaptively changed in accordance with the movement direction of the motion vector and the movement speed. With this arrangement, the reference-image cache hit possibility in the subsequent macroblock processing is improved, so that the performance of the entire compressed-image decoding system can be improved. FIG. 19 shows, in a flow chart, a processing procedure for obtaining the reference image in this case.

First, a reference position in the reference frame is calculated based on a motion vector (step S21). A determination is made as to whether or not image data at the calculated reference position is cached in the local storage (step S22).

In this case, when there is no corresponding data in the storage data, i.e., when a cache miss occurs, a motion vector to be decoded for a next macroblock is predicted based on the current macroblock and surrounding motion vectors (step S23). A frame region to be cached, i.e., a cache area, is calculated based on the calculated motion vector (step S24). The calculated cache area is transferred from the main memory to the local storage of the sub-processor (steps S25 and S26).

FIG. 20 illustrates one example of the processing procedure in step S23 for predicting a motion vector to be decoded for a next macroblock, based on the current macroblock and surrounding motion vectors. In the figure, a macroblock motion vector is predicted by extrapolation. In order to predict a motion vector by extrapolation, motion vectors of previous macroblocks (two macroblocks in the illustrated example) are stored and a motion vector used for a next macroblock is calculated in accordance with the movement speeds of the X and Y coordinate directions.

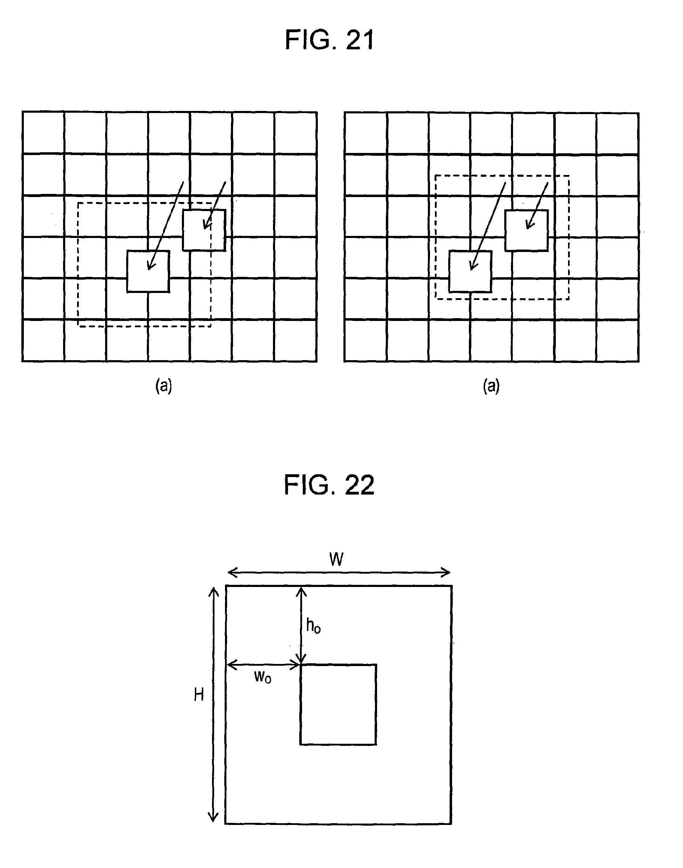

FIG. 21 also illustrates a processing procedure for determining a frame region to be cached, i.e., a cache area, based on the motion vector in step S24. In this procedure, the next-block motion vector calculated in step S23 described above is input to a cache processing block and a region to be cached is determined.

FIG. 21(a) shows an example of an operation when a motion-vector prediction result is not considered. In this case, an area centering at reference data used this time is cached. As can be understood from the illustrated example, data that is highly likely to be used as a reference in the next macroblock processing cannot be accommodated in the cache. Thus, the possibly that the data is re-transmitted from the main memory in the next processing increases, which becomes a cause for a performance decline.

FIG. 21(b) shows a case in which a motion-vector prediction result is considered to calculate a cache area. In this case, since the possibility that data to be used in the next macroblock processing is cached is high, an advantage of increasing the performance of the decoding processing system is expected.

FIG. 22 illustrates one example of a cache-area calculation method. It is now assumed that the cache memory has a size that can store three times the area of a macroblock in both height and width directions. The coordinates of an image to be referred to by a macroblock being decoded are expressed by $(X_{ref}, Y_{ref})$, and the coordinates of an image that is predicted to be referred to by a next macroblock based on the motion vector predicted in the processing procedure shown in FIG. 20 are expressed by $(X_{next}, Y_{next})$. During the transfer of the reference image, determination of which region in the frame memory is to be transferred from the main memory to the cache is equivalent to determination of parameters $h_o$ and $w_o$ in the figure. Using $(X_{ref}, Y_{ref})$ and $(X_{next}, Y_{next})$, the parameters are calculated from the following expressions.

$$w_o = (W/3) \times (1-\alpha)$$

$$\alpha' = (X_{next} - (X_{ref} + MW)) \times weight\ W$$

$$h_o = (H/3) \times (1 - \beta)$$

$$\beta' = (Y_{next} - Y_{ref}) \times weight\ H$$

In this case, weight H and weight W indicate weighting factors for mobility and optimum values are selected therefor during the application. Also, $\alpha$ and $\beta$ are values obtained by saturating $\alpha'$ and $\beta'$, respectively, in the range of -1 to 1.

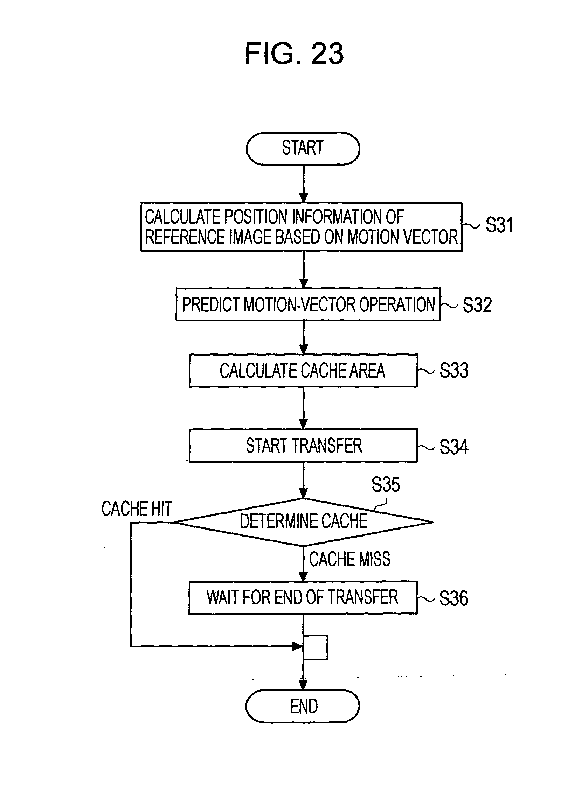

FIG. 23 shows, in a flow chart, an example of application of the reference-image obtaining processing procedure shown in FIG. 19.

First, a reference position in the reference frame is calculated based on a motion vector (step S31).

A motion vector to be decoded for a next macroblock is predicted based on the current macroblock and surrounding motion vectors (step S32). A frame region to be cached, i.e., a cache area, is calculated based on the calculated motion vector (step S33).

The transfer of the calculated cache area from the main memory to the local storage of the sub-processor is started (step S34). A determination is made as to whether or not image data determined as the cache area is cached in the local storage (step S35). When there is no corresponding data in the local storage, i.e., when a cache miss occurs, the cache area is transferred from the main memory to the local storage of the sub-processor (step S36).

In the operation procedure shown in FIG. 19, only when a cache miss occurs, processing for motion vector prediction (step S23) and for cache-area calculation (step S24) are started. However, even with the use of the above-described scheme in which the movement direction and the speed of an image block are calculated using a motion vector to determine a cache area, a cache miss occurs at a some point because of the limited cache region and a process required for transfer waiting causes the processing performance to decrease.

In contrast, according to the operation procedure shown in FIG. 23, even when desired data exists (i.e., is cached) in the local storage in the sub-processor, a motion vector is constantly predicted and cache read-ahead processing is performed in a speculative manner. In this case, vector prediction processing is required every time, but the performance of the entire system can be improved as long as the load of a process required in the prediction processing is low compared to the data-transfer waiting processing during a cache miss.

Data transfer performed between the main memory and the local storage as a result of such speculative cache processing ends in a shorter period of time than image decoding processing performed for each macroblock. Thus, it is possible to efficiently perform cache processing of reference image data without reducing the overall performance of the decoding system.

Industrial Applicability

The present invention has been described above in detail with reference to the particular embodiment. However, it is obvious that those skilled in the art can make modifications and substitutions to the embodiment in a scope without departing from the substance of the present invention.

One embodiment of the present invention has been described hereinabove in conjunction with an example of a case in which a compressed image data that has been subjected to inter-frame coding is decoded by a multi-processor system having one or more sub-processors that are can execute a program loaded on its own local storage and a main processor that issues an instruction for executing the program to the sub-processor(s). The substance of the present invention, however, is not limited to the embodiment. Even when decoding processing of image data is to be performed by a system having a configuration other than a multi-processor configuration or even when data processing other than image decoding is to be performed, the application of the present invention can increase the cache hit rate and improve the performance of processing using cache and the performance of the entire system.

In essence, the present invention has been disclosed by way of example and the content described herein should not be construed as limiting. The scope of the claims should be construed in order to understand the substance of the present invention.

## Claims

1. An information processing system comprising:

   one or more sub-processors each capable of executing a program loaded on its own local storage,
   a main processor for giving an instruction for executing the program to the sub-processor; and
   a main memory shared by the processors,

   wherein, based on a feature of data currently cached on the local storage, a sub-processor to which processing of data on the main memory is assigned adaptively determines a cache area on the main memory, the cache area being to be cached on the local storage next.

2. The information processing system according to claim 1, wherein, based on a parameter indicating a feature of image data currently cached on the local storage, a sub-processor to which decoding processing of compressed image data on the main memory is assigned adaptively determines a cache area on the main memory, the cache area being to be cached on the local storage next,.

3. The information processing system according to claim 2, wherein the compressed image data is subjected to inter-frame coding processing in which difference information between an image frame to be compressed and an image frame serving as a reference is compressed, and
   based on a parameter indicating a feature of image data, the sub-processor determines a reference position used for generating the difference information, the reference position being located in a reference frame, and uses image data around the reference position as the cache area.

4. The information processing system according to claim 3, wherein image-block motion information encoded together with the image data is used as the parameter indicating the feature of the image data, and based on the encoded image-block motion information, a movement direction and a speed of an image block are calculated to predict an operation of the image block, thereby determining the cache area.

5. The information processing system according to claim 4, wherein motion information corresponding to multiple previous image blocks is stored and motion information used for a next image block is determined by extrapolation based on movement speeds in X and Y coordinate directions.

6. The information processing system according to claim 4, wherein an operation of an image block is constantly predicted and cache read-ahead processing is executed in a speculative manner.

7. An information processing system for decoding compressed image data, the system comprising:

   first storing means for storing compressed image data;
   decoding processing means for decoding compressed image data;
   second storing means for caching image data used for the decoding processing performed by the decoding processing means; and
   cache controlling means for adaptively determining a cache area in the first storing means, based on a parameter indicating a feature of image data cached by the second storing means.

8. The information processing system according to claim 7, wherein the compressed image data is subjected to inter-frame coding processing in which difference information between a frame to be compressed and an frame serving as a reference is compressed, and

based on a parameter indicating a feature of image data, the cache controlling means determines a reference position used for generating the difference information, the reference position being located in a reference frame, and uses image data around the reference position as the cache area.

9. The information processing system according to claim 8, wherein the cache controlling means uses, as the parameter indicating the feature of the image data, image-block motion information encoded together with the image data, and calculates a movement direction and a speed of an image block based on the encoded image-block motion information to predict an operation of the image block, thereby determining the cache area.

10. The information processing system according to claim 9, wherein the cache controlling means stores motion information corresponding to multiple previous image blocks, and determines motion information used for a next image block by extrapolation based on movement speeds in X and Y coordinate directions.

11. The information processing system according to claim 9, wherein the cache controlling means constantly predicts an operation of an image block and executes cache read-ahead processing in a speculative manner.

12. An information processing method for causing, on a system that comprises one or more sub-processors each capable of executing a program loaded on its own local storage, a main processor for giving an instruction for executing the program to the sub-processor, and a main memory shared by the processors, data on the main memory to be assigned to the sub-processor and be executed, the method comprising:

a step of transferring data to be processed from the main memory to the local storage of the sub-processor;
a data processing step of causing the sub-processor to process the data on the local storage;
a cache-area determining step of adaptively determining a cache area on the main memory, the cache area being to be cached on the local storage next, based on a feature of the data processed on the local storage;
a step of determining whether or not a cache area is already cached on the local storage; and
a cache-area transferring step of transferring the determined cache area from the main memory to the cache area, when a cache miss occurs.

13. The information processing method according to claim 12, wherein the decoding processing of compressed image data on the main memory is assigned to the sub-processor, and

in the cache-area determining step, a cache area on the main memory, the cache area being to be cached on the local storage next, is adaptively determined based on a parameter indicating a feature of image data currently cached on the local storage.

14. The information processing method according to claim 13, wherein the compressed image data is subjected to inter-frame coding processing in which difference information between an image frame to be compressed and an image frame serving as a reference is compressed, and

in the cache-area determining step, a reference position used for generating the difference information, the reference position being located in a reference frame, is determined based on a parameter indicating a feature of image data, and image data around the reference position is used as a cache area.

15. The information processing method according to claim 14, wherein in the cache-area determining step, image-block motion information encoded together with the image data is used as the parameter indicating the feature of the image data, and based on the encoded image-block motion information, a movement direction and a speed of an image block are calculated to predict an operation of the image block, thereby determining the cache area.

16. The information processing method according to claim 15, wherein in the cache-area determining step, motion information corresponding to multiple previous image blocks is stored and motion information used for a next image block is determined by extrapolation based on movement speeds in Y and Y coordinate directions.

17. The information processing method according to claim 15, wherein in the cache-area determining step, an operation of an image block is constantly predicted, and in the cache-area transferring step, cache read-ahead processing is executed in a speculative manner.

18. An information processing method for decoding compressed image data subjected to inter-frame coding processing in which difference information between a frame to be compressed and a frame serving as a reference is compressed, the method comprising:

a stream inputting step of inputting a compressed stream from a memory in which compressed image data is stored;
a stream decoding step of decoding the input stream;
a step of inputting a reference frame; and
an image decompression processing step of performing image decompression by using the input reference frame;

wherein in the cache-area inputting step, a reference position used for generating the difference information, the reference position being located in a reference frame, is determined based on a parameter indicating a feature of image data, and image data around the reference position is input, as a cache area, from the memory.

19. The information processing method according to claim 18, wherein in the reference-frame inputting step, image-block motion information encoded together with the image data is used as the parameter indicating the feature of the image data, and based on the encoded image-block motion information, a movement direction and a speed of an image block are calculated to predict an operation of the image block, thereby determining the cache area.

20. The information processing method according to claim 19, wherein in the reference-frame inputting step, motion information corresponding to multiple previous image blocks is stored and motion information used for a next image block is determined by extrapolation based on movement speeds in X and Y coordinate directions.

21. The information processing method according to claim 19, wherein in the reference-frame inputting step, an operation of an image block is constantly predicted and cache read-ahead processing is executed in a speculative manner.

22. A computer program in which processing procedures for causing, on a system that comprises one or more sub-processors each capable of executing a program loaded on its own local storage, a main processor for giving an instruction for executing the program to the sub-processor, and a main memory shared by the processors, data on the main memory to be assigned to the sub-processor and be executed is written in a computer-readable format, the computer program causing the system to execute:

a procedure of transferring data to be processed from the main memory to the local storage of the sub-processor;
a data processing procedure of causing the sub-processor to process the data on the local storage;
a cache-area determining procedure of adaptively determining a cache area on the main memory, the cache area being to be cached on the local storage next, based on a feature of the data processed on the local storage;
a procedure of determining whether or not a cache area is already cached on the local storage; and
a cache-area transferring procedure of transferring the determined cache area from the main memory to the cache area, when a cache miss occurs.

23. A computer program written in a computer-readable format so as to execute processing, on a computer system, for decoding compressed image data subjected to inter-frame coding processing in which difference information between a frame to be compressed and a frame serving as a reference is compressed, the program causing the computer system to execute:

a stream inputting step of inputting a compressed stream from a memory in which compressed image data is stored;
a stream decoding procedure of decoding the input stream;
a procedure of inputting a reference frame; and
an image decompression processing procedure of performing image decompression by using the input reference frame;

wherein in the cache-area inputting procedure, a reference position used for generating the difference information, the reference position being located in a reference frame, is determined based on a parameter indicating a feature of image data, and image data around the reference position is input, as a cache area, from the memory.

# FIG. 1

EP 1 775 962 A1

# FIG. 2

(A)  26 MAIN MEMORY

| ADDITIONAL SEGMENT 0 | ACCESS KEY 0 | MEMORY LOCATION 0 |
|---|---|---|
| ADDITIONAL SEGMENT 1 | ACCESS KEY 1 | MEMORY LOCATION 1 |
| ADDITIONAL SEGMENT 2 | ACCESS KEY 2 | MEMORY LOCATION 2 |
|  |  |  |
| ADDITIONAL SEGMENT M | ACCESS KEY M | MEMORY LOCATION M |

SANDBOX
SANDBOX

| F/E BIT | | SUB-PROCESSOR ID | LS ADDRESS |
|---|---|---|---|

(B)  INFORMATION PROCESSING CONTROLLER  11 (12,13,14)

23-1 (23-4) SUB-PROCESSOR

| ADDITIONAL SEGMENT 0 | MEMORY LOCATION 0 |
|---|---|
| ADDITIONAL SEGMENT 1 | MEMORY LOCATION 1 |
| ADDITIONAL SEGMENT 2 | MEMORY LOCATION 2 |
|  |  |
| ADDITIONAL SEGMENT L | MEMORY LOCATION L |

24-1 (24-4) LS (LOCAL STORAGE)

| SUB-PROCESSOR |
|---|

23-2 (23-5)

| SUB-PROCESSOR |
|---|

23-3 (23-6)

(C)

KEY MANAGEMENT TABLE

| SUB-PROCESSOR ID | | |
|---|---|---|
| 0 | SUB-PROCESSOR KEY 0 | KEY MASK 0 |
| 1 | SUB-PROCESSOR KEY 1 | KEY MASK 1 |
| 2 | SUB-PROCESSOR KEY 2 | KEY MASK 2 |
|  |  |  |
| N | SUB-PROCESSOR KEY N | KEY MASK N |

## FIG. 3

SOFTWARE CELL

| TRANSMISSION-SOURCE ID |
| TRANSMISSION-DESTINATION ID |
| RESPONSE-DESTINATION ID |
| CELL INTERFACE |
| DMA COMMAND |
| PROGRAM (SUB-PROCESSOR PROGRAM) |
| DATA |

| GLOBAL ID |
| NECESSARY SUB-PROCESSOR INFORMATION |
| SANDBOX SIZE |
| PREVIOUS SOFTWARE-CELL ID |

| LOAD COMMAND |
| MAIN-MEMORY ADDRESS |
| SUB-PROCESSOR ID |
| LS ADDRESS |

| KICK COMMAND |
| SUB-PROCESSOR ID |
| PROGRAM COUNTER |

| STATUS REQUEST COMMAND |

| STATUS RETURN COMMAND |

| FUNCTIONAL-PROGRAM EXECUTION COMMAND |
| FUNCTIONAL-PROGRAM ID |

EP 1 775 962 A1

## FIG. 4

STATUS RETURN COMMAND

⋮

| DATA |
|------|

| INFORMATION-PROCESSING-APPARATUS ID |
|---|
| INFORMATION-PROCESSING-APPARATUS TYPE ID |
| MS STATUS |
| MAIN-PROCESSOR OPERATING FREQUENCY |
| MAIN-PROCESSOR USAGE RATE |
| NUMBER OF SUB-PROCESSORS |
| SUB-PROCESSOR ID |
| SUB-PROCESSOR STATUS |
| SUB-PROCESSOR USAGE RATE |
| MAIN-MEMORY TOTAL CAPACITY |
| MAIN-MEMORY USAGE AMOUNT |
| NUMBER OF EXTERNAL STORAGE UNITS |
| EXTERNAL-STORAGE-UNIT ID |
| EXTERNAL-STORAGE-UNIT TYPE ID |
| EXTERNAL-STORAGE-UNIT TOTAL CAPACITY |
| EXTERNAL-STORAGE-UNIT USAGE AMOUNT |

MS STATUS ---- { 0: MASTER
                 1: SLAVE

SUB-PROCESSOR STATUS ---- FOR EACH SUB-PROCESSOR { unused reserved busy

EP 1 775 962 A1

# FIG. 5

2 NETWORK

| 11 | 12 | 13 | 14 |
|---|---|---|---|
| INFORMATION PROCESSING CONTROLLER | INFORMATION PROCESSING CONTROLLER | INFORMATION PROCESSING CONTROLLER | INFORMATION PROCESSING CONTROLLER |

1 INFORMATION PROCESSING APPARATUS

2 INFORMATION PROCESSING APPARATUS

3 INFORMATION PROCESSING APPARATUS

4 INFORMATION PROCESSING APPARATUS

7 VIRTUAL SINGLE INFORMATION PROCESSING APPARATUS

8

| INFORMATION PROCESSING APPARATUS | INFORMATION PROCESSING APPARATUS | INFORMATION PROCESSING APPARATUS | INFORMATION PROCESSING APPARATUS |
|---|---|---|---|
| 1 | 2 | 3 | 4 |

EP 1 775 962 A1

# FIG. 6

SOFTWARE CONFIGURATION OF INFORMATION PROCESSING CONTROLLER

CONTROL PROGRAM

| MS MANAGER | CAPABILITY EXCHANGE PROGRAM | • • • • • • • |

FUNCTIONAL PROGRAM

| STORAGE | PLAYBACK | MATERIAL SEARCH | • • • • • • • |

DEVICE DRIVER

| BROADCAST RECEPTION | MONITOR OUTPUT | BIT-STREAM INPUT/ OUTPUT | NETWORK INPUT/ OUTPUT | • • • • • • • |

# FIG. 7

EP 1 775 962 A1

# FIG. 8

MASTER APPARATUS
(INFORMATION PROCESSING APPARATUS 1)

SLAVE APPARATUS A
(INFORMATION PROCESSING APPARATUS 2)

SLAVE APPARATUS B
(INFORMATION PROCESSING APPARATUS 3)

START          START ---- USER OPERATION          START

81
TRANSMIT OPERATION INFORMATION TO
MASTER APPARATUS

72
RECEIVE OPERATION INFORMATION FROM
SLAVE APPARATUS A

73
CHECK OPERATION STATE OF EACH INFORMATION PROCESSING
APPARATUS AND SELECT INFORMATION PROCESSING APPARATUS
THAT CAN EXECUTE FUNCTIONAL PROGRAM CORRESPONDING
TO OPERATION INFORMATION

74
ISSUE REQUEST FOR EXECUTING
FUNCTIONAL PROGRAM TO SLAVE APPARATUS B

95
RECEIVE EXECUTION REQUEST FROM MASTER APPARATUS

96
EXECUTE FUNCTIONAL PROGRAM

END          END          END

EP 1 775 962 A1

## FIG. 9

7 VIRTUAL SINGLE INFORMATION PROCESSING APPARATUS

9 NETWORK

| 11 | 12 | 13 | 14 |
|---|---|---|---|
| INFORMATION PROCESSING CONTROLLER | INFORMATION PROCESSING CONTROLLER | INFORMATION PROCESSING CONTROLLER | INFORMATION PROCESSING CONTROLLER |
| HARD DISK RECORDER | HARD DISK RECORDER | PDA | PORTABLE CD PLAYER |

1 INFORMATION PROCESSING APPARATUS (MASTER APPARATUS)

2 INFORMATION PROCESSING APPARATUS (SLAVE APPARATUS A)

3 INFORMATION PROCESSING APPARATUS (SLAVE APPARATUS B)

4 INFORMATION PROCESSING APPARATUS (SLAVE APPARATUS C)

MONITOR DISPLAY APPARATUS

SPEAKER APPARATUS

42

43

EP 1 775 962 A1

FIG. 10

1 (2) INFORMATION PROCESSING APPARATUS
(HARD DISK RECORDER)

MAIN PROCESSOR — 21-1
LS — 22-1

29-1 (29-2)

25-1 (25-2) — DMAC ←→ MAIN MEMORY — 26-1 (26-2)

27-1 (27-2) — DC ←→ OPTICAL DISK — 28-2 (28-4)

HARD DISK — 28-1 (28-3)

23-1 (23-4) — SUB-PROCESSOR
24-1 (24-4) — LS

BROADCAST RECEIVER — 32-1 (32-2)

23-2 (23-5) — SUB-PROCESSOR
24-2 (24-5) — LS

VIDEO INPUT UNIT — 33-1 (33-2)

AUDIO INPUT UNIT — 34-1 (34-2)

41

23-3 (23-6) — SUB-PROCESSOR
24-3 (24-6) — LS

VIDEO OUTPUT UNIT ←→ MONITOR DISPLAY APPARATUS

AUDIO OUTPUT UNIT ←→ MONITOR DISPLAY APPARATUS

36-1 (36-2)

42

OPERATION PANEL UNIT

37-1 (37-2)

11 (12) INFORMATION
PROCESSING CONTROLLER

REMOTE-CONTROL
LIGHT RECEIVER ←— REMOTE-CONTROL TRANSMITTER

38-1 (38-2)

43-1 (43-2)

31-1 (31-2)

NETWORK
CONNECTION UNIT — 39-1 (39-2)

EP 1 775 962 A1

# FIG. 11

SOFTWARE CONFIGURATION OF INFORMATION PROCESSING CONTROLLER 11, 12 (INFORMATION PROCESSING APPARATUS 1, 2)

CONTROL PROGRAM

| MS MANAGER | CAPABILITY EXCHANGE PROGRAM |

FUNCTIONAL PROGRAM

| VIDEO/ AUDIO RECORDING | VIDEO/ AUDIO PLAYBACK | MATERIAL SEARCH | PROGRAM VIDEO-RECORDING RESERVATION |

DEVICE DRIVER

| BROADCAST RECEPTION | VIDEO OUTPUT | AUDIO OUTPUT | EXTERNAL-STORAGE-UNIT INPUT/OUTPUT | NETWORK INPUT/ OUTPUT |

EP 1 775 962 A1

# FIG. 12

3 INFORMATION PROCESSING APPARATUS

```
                MAIN PROCESSOR              21-1
                    LS                      22-1
    29-3
    25-3            DMAC                MAIN MEMORY        26-3
    27-3            DC                  MEMORY CARD DISK   28-5

    23-7            SUB-PROCESSOR
    24-7                LS
                                        LIQUID-CRYSTAL
                                        DISPLAY UNIT       52
    23-8            SUB-PROCESSOR
    24-8                LS              AUDIO OUTPUT UNIT   53

                                        CAMERA UNIT        54
    23-9            SUB-PROCESSOR
    24-9                LS              AUDIO INPUT UNIT    55

                                        KEYBOARD UNIT      56

                INFORMATION             NETWORK            57
            13  PROCESSING              CONNECTION UNIT
                CONTROLLER          51
```

## FIG. 13

SOFTWARE CONFIGURATION OF INFORMATION PROCESSING CONTROLLER 13 (INFORMATION PROCESSING APPARATUS 3)

CONTROL PROGRAM

| MS MANAGER | CAPABILITY EXCHANGE PROGRAM |

FUNCTIONAL PROGRAM

| VIDEO/ AUDIO RECORDING | VIDEO/ AUDIO PLAYBACK | PHONE | WORD PROCESSING | SPREADSHEET | WEB BROWSER |

DEVICE DRIVER

| VIDEO OUTPUT | AUDIO OUTPUT | CAMERA VIDEO INPUT | MICROPHONE AUDIO INPUT | NETWORK INPUT/OUTPUT |

EP 1 775 962 A1

# FIG. 14

4 INFORMATION PROCESSING APPARATUS
(PORTABLE CD PLAYER)

| | MAIN PROCESSOR | |
| | LS | 22-4 ~ 21-4 |

29-4

25-4 — DMAC ↔ MAIN MEMORY — 26-4

27-4 — DC ↔ CD — 28-6

23-10 — SUB-PROCESSOR
24-10 — LS

23-11 — SUB-PROCESSOR
24-11 — LS

23-12 — SUB-PROCESSOR
24-12 — LS

INFORMATION
14 PROCESSING
CONTROLLER

LIQUID-CRYSTAL
DISPLAY UNIT — 62

AUDIO OUTPUT UNIT — 63

OPERATION
BUTTON UNIT — 64

NETWORK
CONNECTION UNIT — 65

61

# FIG. 15

SOFTWARE CONFIGURATION OF INFORMATION PROCESSING CONTROLLER 14
(INFORMATION PROCESSING APPARATUS 4)

CONTROL PROGRAM

MS MANAGER | CAPABILITY EXCHANGE PROGRAM

FUNCTIONAL PROGRAM

MUSIC PLAYBACK

DEVICE DRIVER

AUDIO OUTPUT | CD CONTROL | NETWORK INPUT/OUTPUT

# FIG. 16

FIG. 17

```
                    START

                     ┌─┐
        ┌────────────┤ │
        │            └─┘
        │             │
        │    ┌─────────▼──────────┐
        │    │ INPUT COMPRESSED STREAM │───S1
        │    └─────────┬──────────┘
        │             │
        │    ┌─────────▼──────────┐
        │    │    DECODE STREAM    │───S2
        │    └─────────┬──────────┘
        │             │
        │    ┌─────────▼──────────┐
        │    │ INPUT REFERENCE FRAME │───S3
        │    └─────────┬──────────┘
        │             │
        │    ┌─────────▼──────────┐
        │    │   PERFORM IMAGE     │───S4
        │    │ DECOMPRESSION PROCESSING │
        │    └─────────┬──────────┘
        │             │
        │    ┌─────────▼──────────┐
        │    │ OUTPUT DECODING RESULT │───S5
        │    └─────────┬──────────┘
        │             │         S6
        │          ◇──▼──◇
        └──────────  DETERMINE
                    NUMBER OF BLOCKS ◇
                     │
                    END
```

FIG. 18

```
                    START
                     │
        ┌────────────▼──────────────────┐
        │ CALCULATE POSITION INFORMATION OF │───S11
        │ REFERENCE IMAGE BASED ON MOTION VECTOR │
        └────────────┬──────────────────┘
                     │          S12
   CACHE HIT   ◇─────▼──────◇
      ┌────────  DETERMINE CACHE ◇
      │              │
      │              │ CACHE MISS
      │     ┌────────▼─────────┐
      │     │  START TRANSFER   │───S13
      │     └────────┬─────────┘
      │              │
      │     ┌────────▼─────────┐
      │     │ WAIT FOR END OF TRANSFER │───S14
      │     └────────┬─────────┘
      │              │
      │            ┌─┐
      └────────────┤ │
                   └┬┘
                    │
                   END
```

# FIG. 19

START

CALCULATE POSITION INFORMATION OF
REFERENCE IMAGE BASED ON MOTION VECTOR  — S21

DETERMINE CACHE  S22

CACHE HIT

CACHE MISS

PREDICT MOTION VECTOR OPERATION  — S23

CALCULATE CACHE AREA  — S24

START TRANSFER  — S25

WAIT FOR END OF TRANSFER  — S26

END

# FIG. 20

PREDICTED MOTION VECTOR

$Y_{n+1}$

$Y_n$

$\Delta l$

$\Delta k$

$\Delta m$  $\Delta n$  $X_n$  $X_{n+1}$

$$X_{n+1} = X_n + \Delta n \times \Delta n / \Delta m$$

$$Y_{n+1} = Y_n + \Delta l \times \Delta l / \Delta k$$

# FIG. 21

(a)

(a)

# FIG. 22

# FIG. 23

```
              ┌──────────┐
              │  START   │
              └────┬─────┘
                   │
                   ▼
   ┌────────────────────────────────────────────┐
   │ CALCULATE POSITION INFORMATION OF          │~ S31
   │ REFERENCE IMAGE BASED ON MOTION VECTOR     │
   └────────────────────┬───────────────────────┘
                        │
                        ▼
      ┌──────────────────────────────────────┐
      │ PREDICT MOTION-VECTOR OPERATION       │~ S32
      └──────────────────┬───────────────────┘
                         │
                         ▼
         ┌──────────────────────────────┐
         │   CALCULATE CACHE AREA        │~ S33
         └──────────────┬───────────────┘
                        │
                        ▼
         ┌──────────────────────────────┐
         │     START TRANSFER            │~ S34
         └──────────────┬───────────────┘
                        │           S35
   CACHE HIT            ▼
   ┌──────────◇ DETERMINE CACHE ◇
   │                    │
   │               CACHE MISS
   │                    ▼
   │        ┌──────────────────────────┐
   │        │ WAIT FOR END OF TRANSFER │~ S36
   │        └──────────┬───────────────┘
   │                   │
   └──────────────►┌───┐
                   └─┬─┘
                     ▼
              ┌──────────┐
              │   END    │
              └──────────┘
```

# FIG. 24

MAIN PROCESSOR

LOCAL STORAGE

MEMORY CONTROLLER ⟷ MAIN MEMORY

SUB-PROCESSOR

LOCAL STORAGE

SUB-PROCESSOR

LOCAL STORAGE

SUB-PROCESSOR

LOCAL STORAGE

## INTERNATIONAL SEARCH REPORT

| | International application No. |
|---|---|
| | PCT/JP2005/012422 |

### A. CLASSIFICATION OF SUBJECT MATTER
*H04N7/32* (2006.01), *G06F12/08* (2006.01)

According to International Patent Classification (IPC) or to both national classification and IPC

### B. FIELDS SEARCHED

Minimum documentation searched (classification system followed by classification symbols)
*H04N7/32* (2006.01), *G06F12/08* (2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 11-215509 A (NEC Corp.), 06 August, 1999 (06.08.99), | 7-9,11,18,19, 21,23 |
| Y | Par. Nos. [0001], [0038] to [0058]; Figs. 1 to 3 (Family: none) | 1-4,6,12-15, 17,22 |
| A | | 5,10,16,20 |
| Y | JP 2000-30047 A (Sony Corp.), 28 January, 2000 (28.01.00), | 1-4,6,12-15, 17,22 |
| A | Par. Nos. [0026] to [0031], [0043] to [0047]; Figs. 1, 5, 6 & US 2002/31184 A1 | 5,7-11,16, 18-21,23 |
| A | JP 2000-278693 A (NEC Corp.), 06 October, 2000 (06.10.00), Full text; all drawings & US 6687298 B1 | 1-23 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 October, 2005 (17.10.05) | 25 October, 2005 (25.10.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

**Patent documents cited in the description**

- JP 2002342165 A
- JP 2002351850 A
- JP 2002358289 A
- JP 2002366533 A
- JP 2002366534 A